# EUROPEAN PATENT APPLICATION

(11) **EP 4 730 878 A1**
(43) Date of publication of application: **22.04.2026**
(21) Application number: 23941619.1
(22) Date of filing: 15.06.2023
(51) Int. Cl.: H04W 56/00

(54) **TERMINAL, WIRELESS COMMUNICATION METHOD, AND BASE STATION**

(71) Applicant: NTT DOCOMO, INC., Tokyo 100-6150 (JP)
(72) Inventor: OKUMURA, Mamoru, Tokyo 100-6150 (JP); MATSUMURA, Yuki, Tokyo 100-6150 (JP); HARADA, Hiroki, Tokyo 100-6150 (JP); WANG, Jing, Beijing 100190 (CN)
(74) Representative: Hoffmann Eitle
(86) International application number: PCT/JP2023/022322
(87) International publication number: WO 2024/257317

(57) **Abstract**

A terminal according to one aspect of the present disclosure includes a receiving section that receives a signal for triggering a UE-based timing advance measurement, and a control section that performs the UE-based timing advance measurement for a candidate cell, based on the signal, wherein the control section controls performing of the UE-based timing advance measurement, based on whether or not the signal includes an indication of the candidate cell for performing the UE-based timing advance measurement, or based on reception of a physical downlink control channel order.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 16/5G or later), communication is controlled based on inter-cell mobility with a plurality of cells including a non-serving cell or inter-cell mobility using a plurality of transmission/reception points (for example, multi-TRP (MTRP)). It is also assumed that, in inter-cell mobility, a candidate cell is configured separately from a serving cell, and switch/switching between the serving cell and the candidate cell is performed.

In a case of applying inter-cell mobility (for example, switching between a serving cell and a candidate cell or the like), how to control UL transmission (as an example, control of timing advance and the like) is a problem. For example, as a method of acquiring timing advance, it is also assumed that UE based TA measurement is supported.

However, when the UE based TA measurement is supported, it is not clear how to handle acquired TA (for example, validity determination of the acquired TA and the like).

The present disclosure has been made in view of this respect, and an object of the present disclosure is to provide a terminal, a radio communication method, and a base station that enable appropriate control of communication even when UE based timing advance measurement is supported.

### Solution to Problem

A terminal according to one aspect of the present disclosure includes a receiving section that receives a signal for triggering a UE-based timing advance measurement, and a control section that performs the UE-based timing advance measurement for a candidate cell, based on the signal, wherein the control section controls performing of the UE-based timing advance measurement, based on whether or not the signal includes an indication of the candidate cell for performing the UE-based timing advance measurement, or based on reception of a physical downlink control channel order. Advantageous Effects of Invention

According to one aspect of the present disclosure, it is possible to appropriately control communication even when UE based timing advance measurement is supported.

### Brief Description of Drawings

[FIG. 1] FIG. 1A is a diagram to show an example of movement of a UE in Rel. 17. FIG. 1B is a diagram to show an example of movement of a UE in Rel. 18.
[FIG. 2] FIG. 2 is a diagram to show an example of association between a serving cell and a candidate cell.
[FIG. 3] FIG. 3A is a diagram to show a second example of option 2 of a candidate cell configuration. FIG. 3B is a diagram to show a third example of option 2 for the candidate cell configuration.
[FIG. 4] FIG. 4 is a diagram to show example 1 of serving cell switching.
[FIG. 5] FIG. 5 is a diagram to show example 2 of the serving cell switching.
[FIG. 6] FIG. 6 is a diagram to show example 3 of serving cell switching.
[FIG. 7] FIG. 7 is a diagram to show an example of a timing advance group (TAG) to which a cell included in a cell group belongs.
[FIG. 8] FIG. 8 is a diagram to show an example of a MAC CE for a timing advance command.
[FIG. 9] FIG. 9 is a diagram to show another example of the MAC CE for the timing advance command.
[FIG. 10] FIG. 10 is a diagram to show an example of configuration of a TAG when association of a TAG ID with a candidate cell is supported.
[FIG. 11] FIG. 11 is a diagram to show an example of a MAC CE for a timing advance report.
[FIG. 12] FIG. 12 is a diagram to show an overview of L1L2-triggered mobility (LTM).
[FIG. 13] FIG. 13 is a diagram to show a PDCCH indication-based RACH (PDCCH ordered RACH) with random access response (RAR) monitoring for a serving cell.
[FIG. 14] FIG. 14 is a diagram to show a PDCCH indication-based RACH (PDCCH ordered RACH) without random access response (RAR) monitoring for a candidate cell.
[FIG. 15] FIG. 15 is a diagram to show an example of UE based TA measurement.
[FIG. 16] FIG. 16 is a diagram to show an example of UE based TA measurement according to a zero-th embodiment.
[FIG. 17] FIG. 17 is a diagram to show an example of a criterion for determining validity of TA according to a first embodiment.
[FIG. 18] FIG. 18 is a diagram to show an example of the criterion for determining validity of TA according to the first embodiment.
[FIG. 19] FIG. 19 is a diagram to show an example of a schematic structure of a radio communication system according to one embodiment.
[FIG. 20] FIG. 20 is a diagram to show an example of a structure of a base station according to one embodiment.
[FIG. 21] FIG. 21 is a diagram to show an example of a structure of a user terminal according to one embodiment.
[FIG. 22] FIG. 22 is a diagram to show an example of a hardware structure of the base station and the user terminal according to one embodiment.
[FIG. 23] FIG. 23 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between the plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (L1/L2 Inter-Cell Mobility)

It is studied that the UE performs UL transmission to one or a plurality of cells/TRPs. As a procedure in this case, scenario 1 or scenario 2 below is considered. Note that, in the present disclosure, a serving cell may be interpreted as a TRP in the serving cell. Layer 1/layer 2 (L1/L2) and DCI/Medium Access Control Control Element (MAC CE) may be interchangeably interpreted. In the present disclosure, a physical cell ID (Physical Cell Identity (PCI)) different from the PCI of the current serving cell may be simply referred to as a "different PCI". A non-serving cell, a cell having a different PCI, and an additional cell may be interchangeably interpreted.

### <Scenario 1>

Scenario 1 corresponds to, for example, inter-cell mobility for multi-TRP, but may be a scenario not corresponding to inter-cell mobility for multi-TRP.

(1) The UE receives, from the serving cell, a configuration of an SSB for beam measurement of a TRP corresponding to a different PCI from the serving cell and a configuration (including resources of the different PCI) necessary for using radio resources for data transmission and reception.
(2) The UE performs beam measurement of the TRP corresponding to the different PCI, and reports beam measurement results to the serving cell.
(3) Based on the above report, the transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE needs to invariably cover the serving cell, including a case of the multi-TRP. Similarly to a conventional system, the UE needs to use a common channel (a broadcast control channel (BCCH), a paging channel (PCH)) and the like from the serving cell.

In scenario 1, when the UE transmits and receives an additional cell/TRP (a TRP corresponding to a PCI of the additional cell) and a signal, the serving cell (assumption of the serving cell in the UE) is not changed. The UE is configured with a higher layer parameter related to the PCI of the non-serving cell from the serving cell. Scenario 1 may be applied in Rel. 17, for example.

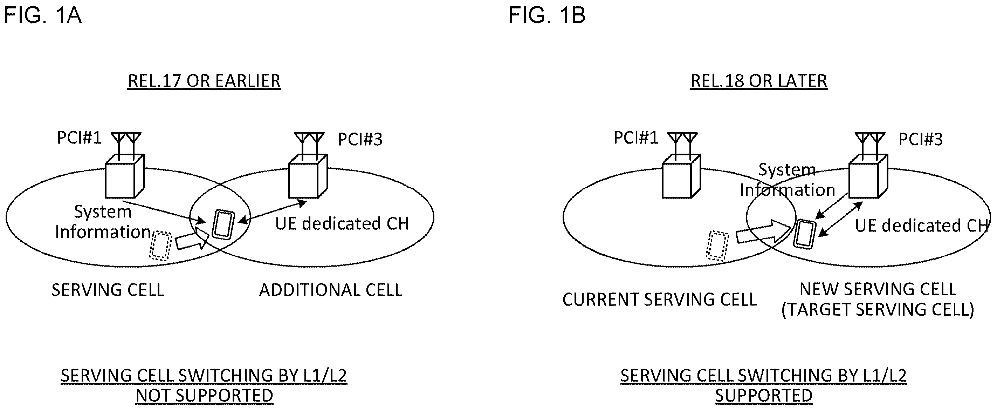

FIG. 1A is a diagram to show an example of movement of the UE in Rel. 17. A case is assumed in which the UE moves from a cell (serving cell) of PCI #1 to a cell (additional cell) (overlapping the serving cell) of PCI #3. In this case, in Rel. 17, switching of the serving cells by L1/L2 is not supported.

The additional cell is a cell having an additional PCI different from the PCI of the serving cell. The UE can receive/transmit a UE-dedicated channel (UE-dedicated CH) from the additional cell. Meanwhile, the UE needs to be present within coverage of the serving cell in order to receive a UE common channel (for example, system information/paging/short message). When the UE moves out of coverage of the serving cell, switching of cells (for example, processing such as RRC reconfiguration) is required through handover (also referred to as L3 mobility) or the like.

### <Scenario 2>

In scenario 2, L1/L2 inter-cell mobility (for example, L1L2-triggered mobility (LTM)) is applied. In L1/L2 inter-cell mobility, the serving cell can be changed by using a function such as beam control without performing RRC reconfiguration. In other words, transmission and reception to and from a candidate cell/an additional cell can be performed without performing handover. For handover, RRC reconnection is required, which generates a period in which data communication cannot be performed, and thus by applying L1/L2 inter-cell mobility that does not require handover, data communication can be continued even at the time of the serving cell change. Scenario 2 may be applied in Rel. 18, for example. In scenario 2, for example, the following procedure is performed.

(1) The UE receives configuration information (for example, SSB configuration, or the like) related to a cell (additional cell/candidate cell/target serving cell) having a different PCI from a serving cell (Current serving cell) for changing beam measurement/serving cell.
(2) The UE performs beam measurement of the cell using the different PCI, and reports measurement results to the serving cell.
(3) The UE may receive a configuration (serving cell/candidate cell configuration) of the cell having the different PCI by higher layer signaling (for example, RRC). In other words, a pre-configuration related to serving cell change may be performed.
   The configuration may be performed together with or may be performed separately from the configuration in (1).
(4) Based on the above report, the TCI state of the cell having the different PCI may be activated by L1/L2 signaling according to the serving cell change. The TCI state activation and the serving cell change may be separately performed.
(5) The UE changes the serving cell (assumption of the serving cell), and starts reception/transmission by using a pre-configured UE-dedicated channel and the TCI state.

In other words, in scenario 2, the serving cell (assumption of the serving cell in the UE) is updated by L1/L2 signaling. Scenario 2 may be applied in Rel. 18.

FIG. 1B is a diagram to show an example of movement of the UE in Rel. 18. In Rel. 18, the serving cell is switched by L1/L2 (for example, DCI/MAC CE). Here, a case is shown where the PCI is switched from PCI #1 corresponding to the current serving cell (for example, Current serving cell) to PCI #3 corresponding to the candidate cell (for example, Target serving cell) by L1/L2 signaling.

The UE may receive/transmit a common channel (for example, system information/paging/short message)/UE-dedicated channel from/to a new serving cell (target serving cell #3). With this, the UE may move out of the coverage of the serving cell PCI #1 before the switching.

### (Configuration of Plurality of Candidate Cells)

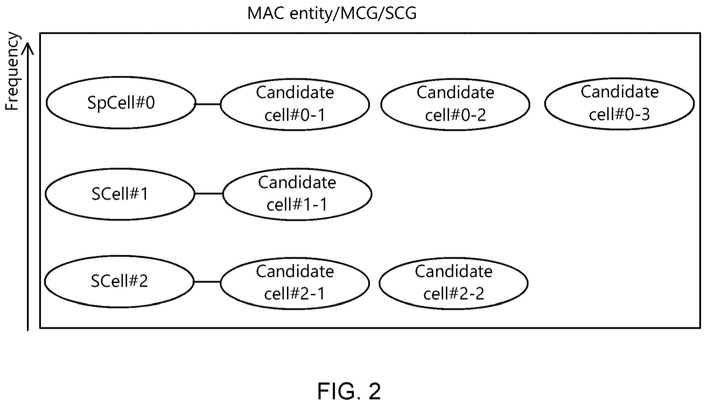

FIG. 2 is a diagram to show an example of association between the serving cell and the candidate cell. It is assumed that SpCell #0, SCell #1, or SCell #2 is a serving cell (for example, a current serving cell/a candidate cell to be a serving cell). Note that the SpCell means a special cell (including a primary cell (PCell) and a primary secondary cell (PSCell)). The SCell means a secondary cell.

A candidate cell (for example, a target serving cell/a candidate cell that is not the current serving cell) may be associated with the SpCell/SCell. In FIG. 2, SpCell #0 is associated with candidate cell #0-1, candidate cell #0-2, and candidate cell #0-3. SCell #1 is associated with candidate cell #1-1. SCell #2 is associated with candidate cells #2-1 and #2-2. In this way, one or more candidate cells (for example, the target serving cell/candidate cell(s) that is not the current serving cell) may be associated with the serving cell.

Alternatively, a candidate cell may not be clearly associated with each serving cell.

For configuration of candidate cells as candidates when the serving cell is changed, options 1 and 2 below are considered, for example.

### <Option 1>

As in inter-cell mobility of Rel. 17, information in ServingCellConfig may include information related to a plurality of candidate cells. This case requires that the plurality of candidate cells share the same configuration of a PDCCH/PDSCH/UL or the like as that for the serving cell.

For example, in the inter-cell mobility of Rel. 17, "mimoParam-r17" is added below ServingCellConfig to add PCI configuration information. mimoParam-r17 may include additionalPCI-ToAddModList-r17 as an information list of additional SSBs having PCIs different from a PCI of the serving cell. The same configuration as that for the serving cell may be applied to the candidate cells (additional cells, cells with additionalPCI), except for some information.

### <Option 2>

The plurality of candidate cells may be applied with a complete configuration (for example, ServingCellConfig) corresponding to each cell. In other words, the candidate cells may not share configuration information with the serving cell, and may be provided with another configuration (for example, another higher layer parameter). The UE is provided with a full configuration for the respective candidate cells, and thus can perform appropriate communication with the candidate cell.

For example, a plurality of candidate cells may be associated with each serving cell by reusing a carrier aggregation (CA) configuration framework. The CA configuration framework can configure an SpCell and add a plurality of SCells, for each cell group. For example, a serving cell may be configured and a plurality of candidate cells are configured, for each cell group for L1/L2 inter-cell mobility. The candidate cells may be activated/deactivated by a MAC CE. The MAC CE may activate/deactivate TCI information corresponding to the candidate cells to activate/deactivate the candidate cells. It is considered that this method is beneficial for reducing complexity of UE operation.

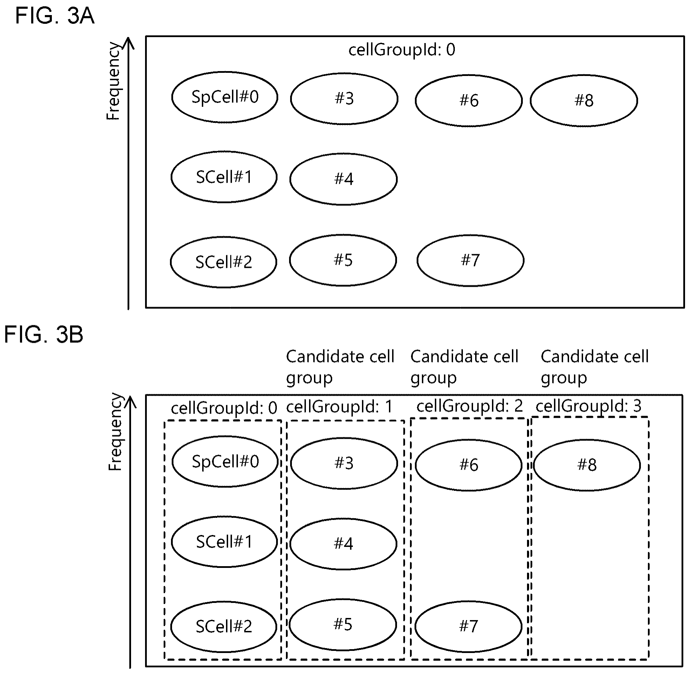

FIG. 3A is a diagram to show a first example of option 2 for the candidate cell configuration. In the example of FIG. 3A, a common candidate cell pool for cell switching in an MCG/SCG is applied to candidate cells. In other words, the candidate cells are handled as one pool (group) irrespective of a frequency band.

FIG. 3B is a diagram to show a second example of option 2 for the candidate cell configuration. In the example of FIG. 3B, a plurality of cell groups are configured, and cell group switching can be performed by L1/L2 signaling. Candidate cell(s) is configured for each cell group, and a configuration of each group includes indices of corresponding SpCell and SCell.

### (Signaling for Serving Cell Change Indication)

At least one of implicit signaling and explicit signaling may be used for the serving cell change indication.

### {Aspect 1}

In aspect 1, implicit signaling for serving cell change indication will be described.

### {{Option 1-1}}

When a specific control resource set (CORESET) (for example, at least one of CORESET #0, a CORESET with a CH5 Type 0-CSS, and a CORESET with a CH6/CH7/CH8 CSS) is indicated (activated) by a MAC CE, together with one or more TCI states associated with a cell with a PCI different from a PCI of a serving cell (when, for the specific CORESET, one or more TCI states associated with a cell with a PCI different from the PCI of the serving cell are indicated/activated by the MAC CE), the UE may judge to change the serving cell to another cell (cell x, cell having a different PCI). In other words, this activation may implicitly indicate that the serving cell is changed to another cell.

In this case, the UE may update, to the same TCI state as the activated TCI state above, a beam for another CORESET ID, another CORESET using CH6/CH7/CH8, or another CORESET using a CSS.

### {{Option 1-2}}

In a case where, when the MAC CE activates/deactivates PDSCH TCI states, all the TCI states activated by the MAC CE are associated with same cell x having a PCI different from the PCI of the serving cell, the UE may judge to change the serving cell to another cell (cell x). In other words, this association may implicitly indicate that the serving cell is changed to another cell.

In a case where this option is applied, when a NW (base station) changes no serving cell, it is necessary that, when the MAC CE activates PDSCH TCI states associated with a cell having a different PCI, a TCI state associated with another cell (for example, a current serving cell or a cell having a second different PCI) be also included in the activation.

### {{Option 1-3}}

In a case where the MAC CE activates/deactivates unified TCI states (corresponding to a unified TCI framework of Rel. 17, for example) and where all the activated unified TCI states are associated with same cell x having a different PCI, the UE may judge to change the serving cell to another cell (cell x). In other words, this association may implicitly indicate that the serving cell is changed to another cell.

### {Aspect 2}

In aspect 2, explicit signaling for serving cell change indication will be described. Scenario 2 described above is applied to aspect 2, for example.

### {{Option 2-1}}

An example of the serving cell change indication will be described below. Note that activation/deactivation of a non-serving cell, change of a serving cell, and transmission/reception to/from another cell (non-serving cell) having a physical cell ID different from a physical cell ID of a serving cell may be interchangeably interpreted.

The UE may receive a new MAC CE used for activation/deactivation of a non-serving cell and including at least one of fields (information) indicating (1) to (3) below corresponding to a non-serving cell. The UE may, when receiving the MAC CE, judge to change the serving cell to another cell (non-serving cell). The UE may control, based on the information, DL/UL signal transmission and reception to and from the non-serving cell. Note that the non-serving cell may be one or a plurality of non-serving cells. In the example to be described below, a MAC CE including a plurality of fields indicating a plurality of non-serving cell indices is applied.

(1) Serving cell ID.
(2) BWP ID.
(3) Non-serving cell ID used for activation. The non-serving cell ID may be replaced with any information (with which the non-serving cell can be identified) corresponding to the non-serving cell.

As an example of (3), any one of (3-1) to (3-5) may be applied, for example.
(3-1) PCI (PCI to be directly used). For example, 10 bits are used.
(3-2) Re-indexing index (new ID) of non-serving cell. The new ID may be associated with part of the PCI, and may be configured only for a serving cell and a non-serving cell used by (available to) the UE. The new ID can reduce the number of bits more than the PCI does.
(3-3) CSI report configuration ID (CSI-ReportConfigId) (when CSI-ReportConfig corresponds to one or a plurality of non-serving cells).
(3-4) CSI resource configuration ID (CSI-ResourceConfigId) (when CSI-ResourceConfigId corresponds to one or a plurality of non-serving cells).
(3-5) Bitmap indicating activation/deactivation of each non-serving cell. A size (the number of bits) of the bitmap may be the same as the number of non-serving cells configured in this CC. For example, when the second non-serving cell of three non-serving cells is activated, "010" is configured.

At least one piece of the information included in the MAC CE may be included in DCI. Alternatively, at least one of serving cells activated by the MAC CE may be indicated by the DCI. The MAC CE/DCI may include a field indicating a TCI state/SSB/CSI-RS from a cell having a different PCI, so that the UE can recognize, in a target cell (serving cell after change), a DL beam to be monitored. By using the TCI state/SSB/CSI-RS, the UE may create a beam report (CSI report) and transmit the created report.

### {{Option 2-2}}

The UE may receive a MAC CE obtained by adding a new 1-bit field "C" to an existing MAC CE. The field indicates whether change of a serving cell is performed. The UE may receive the MAC CE, and may judge, based on the field, whether to change the serving cell to another cell.

### {{Option 2-3}}

For the MAC CE in option 2-2, the MAC CE may further include a field indicating a serving cell index/PCI/another ID (the above-described new ID of option 2-1 or the like), or a field for a TCI state/SSB/CSI-RS for a target cell (serving cell after change).

In this manner, indication for serving cell change indication is indicated by a MAC CE/DCI, thereby allowing the UE to appropriately change a serving cell.

### {Example 1 of Serving Cell Switching}

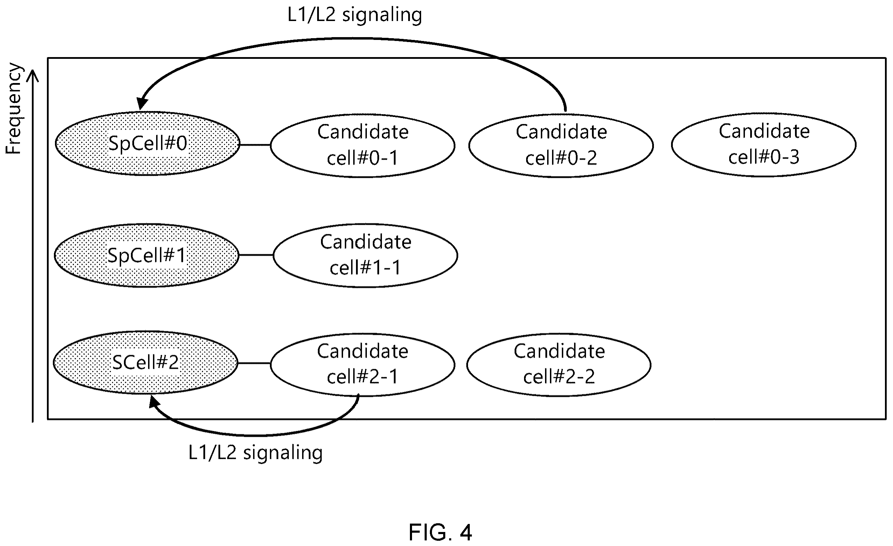

FIG. 4 is a diagram to show example 1 of the serving cell switching. FIG. 4 shows a case where the candidate cells are associated with the respective serving cells.

For example, when L1/L2 signaling indicates, in a serving cell "SpCell #0" in an MCG/SCG, that candidate cell #0-2 is changed to be a serving cell (for example, SpCell), candidate cell #0-2 becomes a new serving cell SpCell. In other words, switching between the serving cell SpCell #0 and candidate cell #0-2 is performed.

For example, when L1/L2 signaling indicates, in a serving cell "SCell #2" in the MCG/SCG, that candidate cell #2-1 is changed to be a serving cell (for example, SCell), candidate cell #2-1 becomes a new serving cell SCell. In other words, switching between the serving cell SCell #2 and candidate cell #2-1 is performed.

### {Example 2 of Serving Cell Switching}

RRC/MAC CE may configure a global candidate cell ID (cell #0, ..., 8) for each cell group, band, FR, or UE. The global candidate cell ID may indicate serving cell switching to the UE.

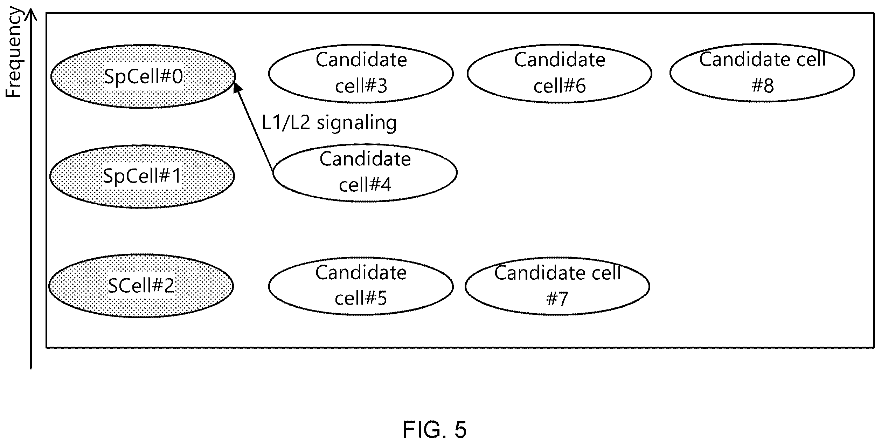

FIG. 5 is a diagram to show example 2 of the serving cell switching. As in FIG. 3A, a pool of a plurality of candidate cells can be configured, and L1/L2 signaling can switch a serving cell to any (activated) candidate cell in the pool. In this case, the configured candidate cell can become either an SpCell or an SCell, based on the L1/L2 signaling.

For example, when L1/L2 signaling indicates, in the serving cell "SpCell #0" in the MCG/SCG, that candidate cell #4 is changed to be a serving cell (for example, SpCell), candidate cell #4 becomes a new serving cell SpCell. In other words, switching between the serving cell SpCell #0 and candidate cell #0-4 is performed.

The UE may receive an indication to change the serving cell (here, switching between the serving cell SPCell #0 and candidate cell #4) by the MAC CE/DCI. It may be determined that indicated candidate cell #4 becomes an SpCell in a new cell group.

### {Example 3 of Serving Cell Switching}

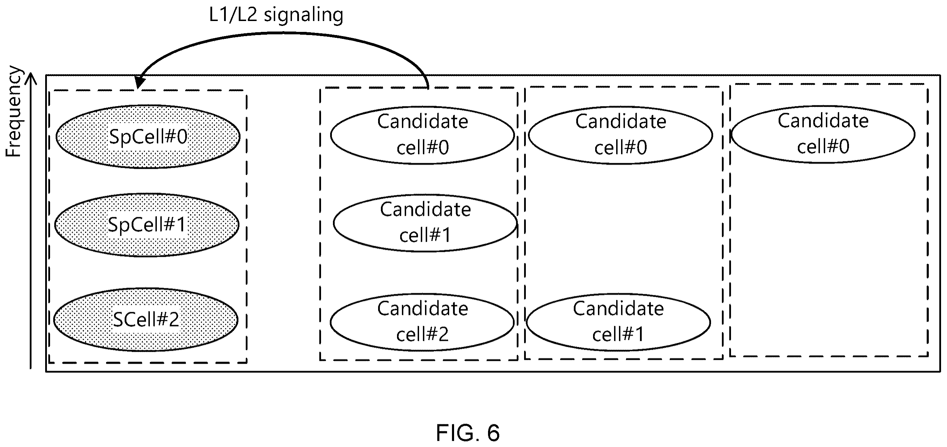

FIG. 6 is a diagram to show example 3 of the serving cell switching. Here, a case is shown where the switching of the cell group is indicated by L1/L2 signaling.

The UE receives an indication to change the serving cell (here, switching between a cell group including SpCells #0/#1/#2 and a cell group including candidate cells #0/#1/#2) by the MAC CE/DCI. Then, a certain cell (here, candidate cell #0) included in the switching-destination cell group becomes a serving cell SpCell. Here, a case where the certain cell is a candidate cell corresponding to the same frequency as the SpCell has been described, but the present disclosure is not limited thereto. The certain cell may be indicated.

The candidate cells (here, candidate cell #1 and candidate cell #2) included in the same cell group as candidate cell #0 become the SCell. In other words, the serving cell group and the candidate cell group are switched by L1/L2 signaling.

### (Timing Advance Group)

When a plurality of TRPs are used, there are some cases where the distance between a UE and each TRP is different. The plurality of TRPs may be included in the same cell (for example, a serving cell). Alternatively, among the plurality of TRPs, a certain TRP corresponds to the serving cell, while the other TRP(s) may correspond to a non-serving cell(s). In this case, it is also assumed that the distance between each TRP and the UE is different.

In existing systems, transmission timing of a UL (Uplink) channel and/or a UL signal (UL channel/signal) is adjusted by timing advance (TA). Reception timing of a UL channel/signal from a different user terminal (UE) is adjusted on the radio base station (also referred to as a TRP (Transmission and Reception Point), gNB (gNodeB), and the like)) side.

A UE may employ timing advance for each timing advance group (TAG) (multiple timing advances) configured in advance to perform timing control for UL transmission.

When the multiple timing advances is employed, timing advance groups (TAGs) classified according to transmission timing are supported. The UE may control UL transmission timing in each TAG by assuming that the same TA offset (or TA value) is used for each TAG. In other words, the TA offset may be configured independently for each TAG.

When the multiple timing advances are employed, the UE independently adjusting transmission timing for the cells belonging to each TAG enables matching at a radio base station in terms of timing of uplink signal reception from the UE even when a plurality of cells are used.

A TAG (for example, serving cells belonging to the same TAG) may be configured by a higher layer parameter. The same timing advance value may be applied to the serving cells belonging to the same TAG (for example, serving cells configured with UL). A timing advance group including an SpCell of a MAC entity may be referred to as a primary timing advance group (PTAG), and a TAG other than the PTAG may be referred to as a secondary timing advance group (STAG). The maximum number of TAGs may be X (for example, X = 4) for each cell group (MCG/SCG).

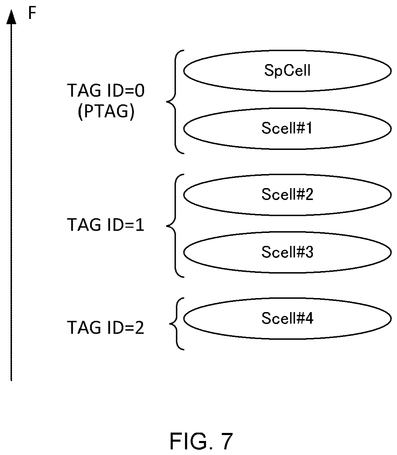

In an existing system (for example, Rel-16 NR), configuration of four TAGs at maximum is supported for each cell group (for example, MCG/SCG) (see FIG. 7). FIG. 7 shows a case where three TAGs are configured for a cell group including the SpCell and SCells #1 to #4. Here, a case is shown where the SpCell and SCell #1 belong to a first TAG (PTAG or TAG #0), SCell #2 and SCell #3 belong to a second TAG (TAG #1), and SCell #4 belongs to a third TAG (TAG #2).

The UE may be notified of a timing advance command (TA command) by using a MAC control element (for example, MAC CE). The TA command is a command indicating a transmission timing value of an uplink channel, and is included in the MAC control element. The TA command (TAC) is signaled from the radio base station to the UE in the MAC layer. The UE controls a certain timer (for example, a TA timer) based on reception of the TA command.

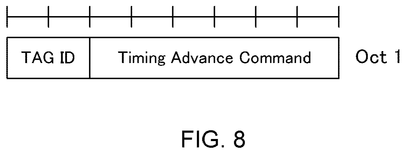

The MAC CE for a timing advance command may be configured to include a field for a timing advance group index (for example, TAG ID) and a field for the timing advance command (see FIG. 8). The MAC CE may be constituted by one octet (= eight bits).

The field of the TAG ID (TAG ID field) may be constituted by, for example, two bits. The TAG ID field may be used to indicate the TAG ID of an addressed TAG. The field of the timing advance command (TAC field) may be constituted by, for example, six bits. The TAC field may indicate an index value T_{A} (0, 1, 2, ..., 63) used for controlling an amount/value (relative amount/relative value) of timing adjustment to be applied to the MAC entity. The MAC CE for the timing advance command shown in FIG. 8 may be referred to as a TAC MAC CE.

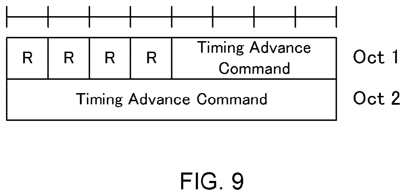

FIG. 9 is a diagram to show another example of the MAC CE for the timing advance command. The MAC CE shown in FIG. 9 may be referred to as an absolute TAC MAC CE. The MAC CE may be constituted by two octets (= 16 bits). Specifically, the MAC CE may include a field for a reserved bit (R bit field) and a field for a timing advance command (TAC field). The R bit field (R = 0) may be constituted by, for example, four bits. The TAC field may be constituted to extend over two octets, for example, and may be 12 bits. The TAC field in FIG. 9 may indicate an index value used to control the amount/value (absolute amount/absolute value) of an actual TA to be applied to the MAC entity, as in FIG. 8. The absolute TAC MAC CE may not include the TAG ID field shown in FIG. 8.

The MAC CE shown in FIG. 8 may be used after initial access is established. On the other hand, the MAC CE shown in FIG. 9 is used only at the time of initial access, and may be included in an RAR or the like. Each field included in the MAC CE for the timing advance command described above may be referred to as a field related to a TA. Among such fields, the TAC field shown in FIG. 8 may be referred to as a TA adjustment field/a field for indicating TA adjustment/a field related to TA adjustment, and the TAC field shown in FIG. 9 may be referred to as an absolute TAC field/a field for indicating an absolute TAC.

### (Control of UL Transmission Based on Timing Advance)

It is also assumed that, in future radio communication systems, UL transmission is controlled based on timing advance for a serving cell (or a TRP of the serving cell) and a non-serving cell/additional cell (or a TRP of the non-serving cell/additional cell) in inter-cell mobility. Alternatively, a case is assumed that, in future radio communication systems, a different TAG (or TAG-ID) is configured for each of one or more TRPs (for example, a plurality of TRPs having different PCIs) corresponding to a certain cell (or CC). Alternatively, a case is assumed that different TRPs corresponding to a certain cell share a common TAG.

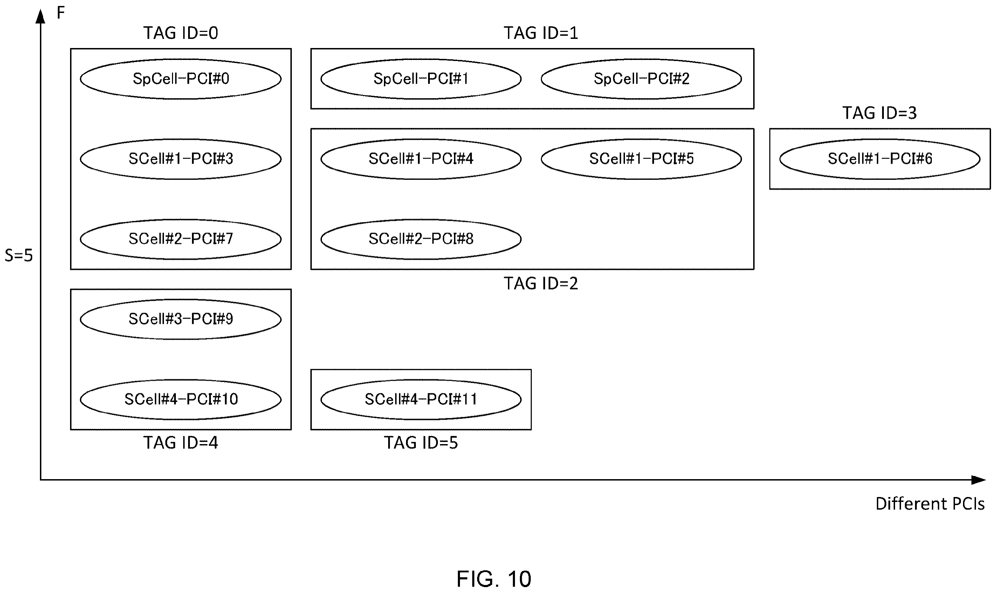

FIG. 10 is a diagram to show an example of configuration of a TAG for a plurality of cells (or TRPs) having different PCIs.

It is also assumed that up to M PCIs (for example, serving cell(s) + candidate cell(s) associated with the serving cell(s)) can be configured for each CC, and configuration of up to N TAGs (for example, N ≤ M) is supported for up to M PCIs. In this case, one or a plurality of PCIs may be associated with one TAG.

One or a plurality of PCIs may be associated with one TAG for up to S serving cells (or for S serving cells at maximum) in the cell group. In this case, up to T TAGs may be configured in consideration of one PCI for each CC (case 1). In other words, up to T x N TAGs may be configured for up to M x S cells. Alternatively, up to U TAGs may be configured for up to M x S cells (case 2).

In this way, when a candidate cell is configured/applied/supported, it is assumed that different serving cells/different candidate cells are associated with the same TAG. The TAG of the candidate cells may be indicated by the base station, or may be determined based on the TA of the candidate cell acquired by the UE.

### (TA Acquisition)

It is also conceivable that the UE performs UL transmission of a candidate cell in consideration of the TA corresponding to the candidate cell. When the TA of the candidate cell is considered, the UE needs to acquire the TA of the candidate cells (for example, TA acquisition of candidate cells).

As the TA acquisition of the candidate cells, a plurality of TA acquisition methods such as TA acquisition using a RACH (for example, RACH-based solutions) and TA acquisition not using a RACH (RACH-less solutions) are conceivable. For the TA acquisition using the RACH, a method with RAR monitoring and a method without RAR monitoring may be supported. The TA acquisition method may be interpreted as a TA acquisition scheme, a TA acquisition type, or a TA acquisition procedure. In the present disclosure, acquisition of a TA, measurement of a TA, calculation of a TA, computation of a TA, and determination of a TA may be interchangeably interpreted.

For example, the UE may acquire the TA of the candidate cell by transmitting a RACH (for example, PDCCH ordered RACH) indicated/triggered by a PDCCH to the candidate cell. The information related to the TA of the candidate cell (for example, a TA value) may be included in a response signal of the RACH (for example, RAR). The RAR may be transmitted from the serving cell or may be transmitted from the candidate cell. Alternatively, the TA of the candidate cell may be acquired by using a RACH triggered by the UE or a RACH triggered by a higher layer from the network. A PDCCH order may be triggered only by a source cell (or the serving cell).

Alternatively, the UE may acquire the TA of the candidate cell by transmitting a signal other than the RACH to the candidate cell. Information related to the TA of the candidate cell (for example, a TA value) may be indicated from the base station to the UE. As the signal other than the RACH, for example, an SRS may be applied (for example, SRS-based TA measurement).

Alternatively, the UE may measure/calculate/acquire the TA for the candidate cell, based on a DL signal (for example, a downlink reference signal) transmitted from each cell (for example, candidate cell/serving cell). A method in which a UE acquires a TA for a candidate cell, based on a DL signal transmitted from one or more cells may be referred to as UE based TA measurement.

In the UE based TA measurement, the downlink reference signal may be a certain DL signal (for example, a synchronization signal block (for example, SSB)/CSI-RS, or the like). For example, the UE may measure a gap/difference between reception timings of DL signals from a plurality of cells (or two cells) and acquire the TA of the candidate cell.

The plurality of cells may include a cell (for example, a serving cell) serving as a reference. In this case, the UE may calculate the TA required for the candidate cell, based on the reception timing of the reference cell (and a TA value of the reference cell) and a timing difference (for example, T) between the reference cell and the candidate cell. The UE may acquire the TA of the candidate cell by using a timing advance command (TAC) transmitted from the serving cell.

### (Maintenance of Uplink Time Alignment)

In order to maintain/perform maintenance of UL time alignment (Maintenance of Uplink Time Alignment), a parameter such as a time alignment timer (for example, timeAlignmentTimer) may be configured. The time alignment timer (per TAG) may control the time that the MAC entity considers the serving cell belonging to the associated TAG to be UL time aligned.

The parameter corresponding to each TAG ID may be configured by a higher layer parameter. For example, parameters such as a time alignment timer (for example, timeAlignmentTimer) corresponding to each TAG ID may be configured. Alternatively, the TAG ID may be configured for each serving cell by a higher layer parameter (for example, tag-ID included in ServingCellConfig). Note that the TAG ID/parameter may be updated by the MAC CE after being configured by the higher layer parameter.

The time alignment timer may be maintained for UL time alignment. In Rel. 17, the time alignment timer may be configured/associated for each TAG. When the UE receives a MAC CE for a timing advance command (for example, a TAC MAC CE), the UE starts or restarts the time alignment timers respectively associated with the indicated timing advance groups (for example, TAGs).

When the MAC entity receives the MAC CE for the timing advance command and a certain value (N_{TA}) is maintained between the MAC entity and an indicated TAG, the MAC entity applies the timing advance command for the indicated TAG and starts or restarts the time alignment timer associated with the indicated TAG. The certain value (N_{TA}) may be a timing advance between DL and UL.

In a case that the timing advance command is received in a RAR message for the serving cell belonging to the TAG (for example, a TAG of the SpCell) or message B (for example, MSGB) for the SpCell, and that the MAC entity does not select a random access preamble from among contention-based random access preambles, the timing advance command for the TAG may be applied, and the time alignment timer associated with the TAG may be started or restarted.

In a case that an absolute timing advance command (for example, Absolute Timing Advance Command) is received in response to transmission of message A (for example, MSGA) including a certain RNTI MAC CE (for example, C-RNTI MAC CE), a timing advance command of the PTAG may be applied.

An operation when the time alignment timer expires may be defined separately for the PTAG and the STAG. Note that a timing advance group including an SpCell of a MAC entity may be referred to as a primary timing advance group (PTAG), and a TAG other than the PTAG may be referred to as a secondary timing advance group (STAG) .

For example, in Rel. 17, it is supported that a certain operation for PTAG is applied in a case that the timing advance timer corresponding to the PTAG expires, and a certain operation for STAG is applied in a case that the timing advance timer corresponding to the STAG expires.

For example, in a case that the time alignment timer expires, the following operation (for example, a certain operation for PTAG/a certain operation for STAG) may be performed.

### {Certain Operation for PTAG}

When a time alignment timer is associated with a PTAG:
- flush all HARQ buffers of all serving cells.
- when configured, notify RRC to release a PUCCH for all serving cells.
- when configured, notify the RRC to release the SRS.
- clear all the configured DL allocation and configured UL allocation.
- clear a PUSCH resource for semi-persistent CSI reporting.
- expire a running time alignment timer.
- keep N_{TA} of all TAGs.

### {Certain Operation for STAG}

When a time alignment timer is associated with the STAG, for all serving cells belonging to the TAG
- flush all HARQ buffers.
- when configured, notify the RRC to release the PUCCH.
- when configured, notify the RRC to release the SRS.
- clear all the configured DL allocation and UL allocation.
- clear a PUSCH resource for semi-persistent CSI reporting.
- keep N_{TA} of the TAG.

### (Timing Advance Reporting)

In order to provide a base station with an estimated value of a timing advance value of a UE, a timing advance reporting (for example, Timing Advance Reporting (TAR)) procedure may be performed. A parameter/condition of timing advance reporting may be configured by RRC. The timing advance reporting may be triggered when a certain event has occurred.

The certain event may be, for example, at least one of a case where trigger of timing advance reporting is indicated by a higher layer, a case where a certain parameter (for example, an offset threshold TA (offsetThresholdTA)) is configured by a higher layer, and a case where a variation between the current estimation of the timing advance value and the last reported timing advance value is equal to or larger than a certain parameter.

The UE (or a MAC entity) may perform the timing advance reporting by using a certain MAC CE (for example, a timing advance report MAC CE). Even when a plurality of events have triggered timing advance reporting, a MAC PDU may include up to one timing advance report MAC CE. When a MAC PDU is transmitted, and a timing advance report MAC CE is included in the PDU, all triggered timing advance reportings may be canceled.

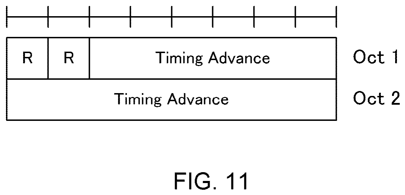

FIG. 11 shows an example of a timing advance report MAC CE. The size of the MAC CE may be fixed and may be constituted of 2 octets.

### (Overview of L1L2-Triggered Mobility (LTM))

In L1L2-triggered mobility (LTM) supported in Rel. 18 and later versions, L1 inter-frequency measurement may be supported. DL synchronization/UL synchronization of a candidate cell based on at least an SSB may be supported before the cell switch command.

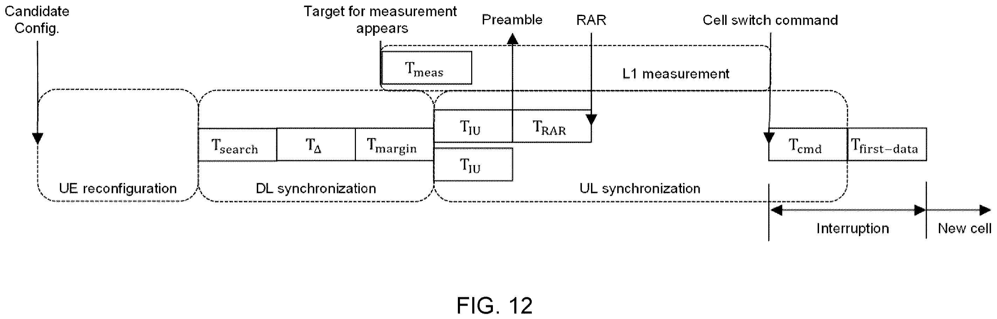

FIG. 12 is a diagram to show an overview of L1L2-triggered mobility (LTM). LTM and L1/L2 inter-cell mobility may be interchangeably interpreted.

The UE receives, from the NW, candidate cell configurations in UE reconfiguration. The UE reconfiguration includes T_{RRC}, and T_{proccessingl/Tproccessing2}. T_{RRC} (for example, up to 10 ms) is a processing time for RRC reconfiguration that delivers candidate cell configurations (candidate configurations). T_{proccessing1/Tproccessing2} (for example, up to 20 ms for the same FR, up to 40 ms for different FRs) are times for respective UE processings before and after a cell switch command. This may include, for some cases, L2/3 reconfiguration, RF re-tuning, baseband re-tuning, security update, if necessary, and the like.

DL synchronization includes T_{search}, T_{Δ}, and T_{margin}. T_{search} (for example, 0 ms when a cell is known, up to 60 ms when a cell is unknown) is a time necessary for a target cell search. T_{Δ} is a time for fine tracking and all timing information acquisition. T_{margin} (for example, up to 2 ms) is a time for post-processing of an SSB and a CSI-RS.

L1 measurement (mesurement) includes Tₘₑₐₛ (SMTC periodicity, (for example, 20 ms)). Tₘₑₐₛ is measurement latency from the appearance of a target to a cell switch command.

UL synchronization includes T_{IU}, T_{RAR}, and T_{cmd}. T_{IU} (for example, up to 15 ms) is a time for uncertain interruption in acquisition of the first available PRACH occasion in a new cell. T_{RAR} (for example, up to 4 ms) is a time for RAR latency. T_{cmd} (for example, up to 5 ms) is a time for processing of L1/L2 command (HARQ and paging).

T_{first-data} after T_{cmd} is a time for the UE to perform, after an RAR, the first DL reception/UL transmission on an indicated beam of a target cell.

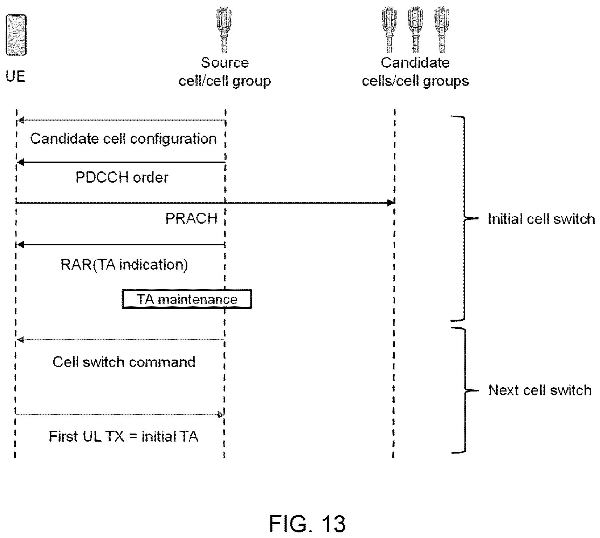

FIG. 13 is a diagram to show an example of a PDCCH order-based RACH (PDCCH ordered RACH) with RAR monitoring. Note that, in the present disclosure, a source cell and a source cell group may be interchangeably interpreted. A candidate cell and a candidate cell group may be interchangeably interpreted.

The source cell may transmit, to the UE, information related to configuration of a candidate cell (for example, candidate cell configuration information). The source cell may transmit, to the UE, a PDCCH order (for example, DCI format 1_0) used to trigger a PRACH. The PDCCH order (or DCI) may indicate a candidate cell (for example, one candidate cell)/random access occasion (RO) as a target of a PRACH trigger/transmission. The UE transmits, based on the PDCCH order, a PRACH in a RACH procedure to the candidate cells, for acquisition of TAGs/TAs.

Next, the source cell transmits, to the UE, a response signal (RAR) to the PRACH. The RAR may include information related to a TA (for example, TA indication). The RAR (for example, a PDSCH including the RAR/a PDCCH for scheduling the PDSCH) may be monitored in a specific search space (for example, a common search space (CSS)) of a specific cell (for example, an SpCell) among current serving cells (only in a Distributed Unit (DU)). In the source cell, TA adjustment (for example, TA maintenance) is performed.

Next, the source cell may transmit a cell switch command to the UE. TA information may be moved/notified from the source cell to a target cell. The UE may control, based on the acquired TA, UL transmission after cell switching. For example, the UE may perform the first UL transmission by using an initial TA when UL synchronization of all candidate cells is not completed after an initial cell switch.

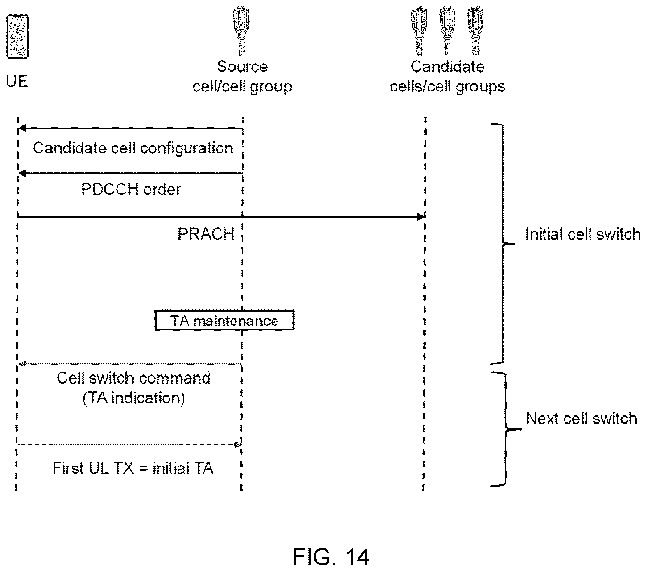

FIG. 14 is a diagram to show an example of a PDCCH order-based RACH (PDCCH ordered RACH) without RAR monitoring. Only the difference between FIG. 14 and FIG. 13 will be described.

In the example of FIG. 14, a PDCCH order used to trigger a PRAH may indicate one or more candidate cells (for example, a plurality of candidate cells)/random access occasions as a target of a PRACH trigger/transmission. The UE may transmit, based on the PDCCH order, a PRACH in a RACH procedure to the candidate cells, for acquisition of a plurality of TAGs/TAs. The source cell does not transmit a response signal (for example, RAR) to the PRACH. The source cell may indicate, to the UE, information related to a TA (for example, TA indication) by using a cell switch command.

In the present disclosure, a RACH without RAR and a RACH without RAR monitoring may be interchangeably interpreted. A RACH may be interpreted as PRACH transmission triggered by a PDCCH order. RACH procedure/PRACH transmission without RAR monitoring may be interpreted as RACH procedure/PRACH transmission not requiring RAR monitoring, or RACH procedure/PRACH transmission in which RAR monitoring is not requested.

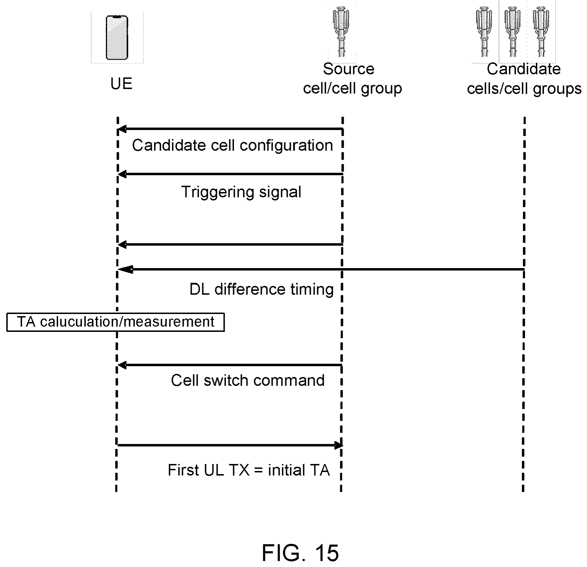

FIG. 15 is a diagram to show an example of UE based TA measurement.

The source cell may transmit, to the UE, information related to configuration of a candidate cell (for example, candidate cell configuration information). The source cell may transmit, to the UE, information about a candidate cell to which UE based TA measurement is applied (or a candidate cell configured with UE based TA measurement).

The source cell may transmit information/signaling for triggering/indicating UE based TA measurement to the UE. The UE based TA measurement may be triggered by a MAC CE/DCI.

When the UE has received the information/signaling for triggering/indicating UE based TA measurement, the UE may measure a gap/difference between reception timings of DL signals from a plurality of cells (or two cells) and acquire the TA of the candidate cell. For example, the UE may measure/calculate a gap/difference between reception timings of DL signals between a reference cell and a candidate cell. Information about the reference cell/candidate cell may be indicated to the UE. As an example, the reference cell may be a source cell (or a serving cell).

The UE may autonomously perform the UE based TA measurement without receiving information/signaling for triggering/indicating UE based TA measurement.

When the reference cell (for example, the source cell/serving cell/specific candidate cell) and the candidate cell are asynchronized, the UE may apply a certain offset parameter in acquiring TA between the reference cell and the candidate cell. The certain offset parameter may be configured for the UE by higher layer configuration (for example, RRC configuration).

Next, the source cell may transmit a cell switch command to the UE. TA information may be moved/notified from the source cell to a target cell. After cell switching, the UE may control UL transmission, based on the TA acquired by the UE based TA measurement.

### (Analysis)

In this way, in L1/L2-based mobility (for example, LTM) supported in Rel. 18 or later versions, it is assumed that TA acquisition of a candidate cell before cell switch command is supported.

As the TA acquisition, it is also assumed that UE based TA measurement is configured/supported. Although TA is acquired based on a timing difference of DL signals between cells (for example, between a candidate cell and a reference cell) by UE based TA measurement, it is also conceivable that the acquired TA is not always appropriate. In such a case, how to determine validity of the TA acquired by the UE through the UE based TA measurement, for example, how a network/the UE determines validity of the TA acquired through the UE based TA measurement, is a problem.

In the following, analyses 1 to 8 describe assumable considerations for UE/network behavior based on TA validity.

### {Analysis 1}

In the first place, with respect to validity of a TA, it is not clear what is meant by TA being invalid (TA being not valid) (definition of TA being invalid).

### {Analysis 2}

It is not clear when reporting of a TA acquired by UE based TA measurement is triggered (TA reporting timing).

### {Analysis 3}

The TA may be disabled after a certain time elapses. It is not clear what operation is to be performed by a UE when the TA is disabled.

### {Analysis 4}

It is also assumed that a network determines validity of a TA. In this case, it is not clear how a UE determines (recognizes) the validity of the determined TA. Furthermore, it is not clear what operation is to be performed by the UE depending on the validity (valid/invalid) of the TA.

### {Analysis 5}

It is not clear what operation is to be performed by a UE when the acquired TA is determined to be valid by the UE and TA acquisition/measurement is triggered by a network.

### {Analysis 6}

It is not clear what operation is to be performed by a UE when UE based TA measurement is in progress and TA acquisition/measurement is triggered by a network.

### {Analysis 7}

In a case of different configurations related to TA acquisition, it is not clear how a TA acquired by UE based TA measurement is indicated to a UE.

### {Analysis 8}

It is not clear what operation is to be performed by a UE when the UE already has (has acquired) a TA of an indicated candidate cell and the TA is indicated by a cell switch command MAC CE.

In this way, when the validity of the TA acquired by the UE based TA measurement is not appropriately determined, or when operation of the UE/network after the validity of the TA is determined is not clear, the timing advance is not appropriately controlled (for example, the TA value to be applied to the UL transmission is not appropriately determined), and throughput reduction/communication quality degradation may occur.

Thus, the inventors of the present invention studied L1/L2-based mobility (for example, LTM)/cell switch operation in a case where UE based TA measurement is configured/supported, and came up with the idea of one aspect of the present embodiment.

Embodiments according to the present disclosure will be described in detail with reference to the drawings as follows. Note that the embodiments/aspects (for example, respective cases) to be described below may each be used individually, or at least two of the embodiments/aspects may be employed in combination.

### (Various Interpretations and so on)

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the following embodiments, a "plurality of" and "two" may be interchangeably interpreted. A "TAG" and a "TAG ID" may be interchangeably interpreted. A "cell", a "CC", and a "carrier" may be interchangeably interpreted. In the following embodiments, a "calculation," "computation" and "acquisition" may be interchangeably interpreted.

The following description may be applied to inter-cell mobility (for example, L1/L2 inter cell mobility), or may be applied to communication control other than inter-cell mobility. The L1/L2 inter-cell mobility may be interpreted as at least one of cell switching, cell switch, and cell change.

In the following embodiments, a candidate cell index and a candidate configuration index (candidate config index) may be interchangeably interpreted. A TAG may be interpreted as a PTAG or an STAG. A timer associated with a corresponding candidate cell index may be interpreted as a timer of a TAG associated with a corresponding candidate cell index. A serving cell may be interpreted as a special cell (for example, SPCell). A candidate cell may include a current serving cell. A target cell may be interpreted as a candidate cell/SpCell. A TA may be interpreted as a TAG/TAC. A target cell index may be indicated by a cell switch command MAC CE.

### (Radio Communication Method)

### <Zero-th Embodiment>

### {Option 1}

Option 1 relates to UE operation when UE based TA measurement is configured/supported.

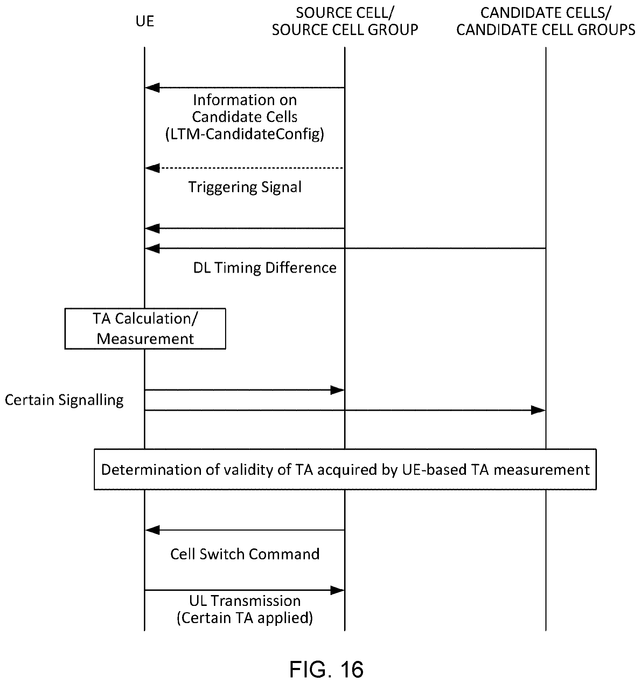

FIG. 16 is a diagram to show an example of cell switch operation when UE based TA measurement is configured/supported. Note that the operation shown in FIG. 16 is an example, and the present embodiment is not limited to this.

A source cell may transmit, to a UE, information related to configuration of a candidate cell (for example, candidate cell configuration information). The information related to the configuration of the candidate cell may be configured by a certain higher layer parameter (for example, LTM- CandidateConfig). The information related to the configuration of the candidate cell may include information related to TA acquisition applied to each candidate cell. For example, the information may include information related to a candidate cell configured with UE based TA measurement.

The source cell may transmit information/signaling for triggering/indicating UE based TA measurement to the UE. The UE based TA measurement may be triggered by a MAC CE/DCI.

When the UE has received the information/signaling for triggering/indicating UE based TA measurement, the UE may measure a gap/difference between reception timings of DL signals from a plurality of cells (or two cells) and acquire the TA of the candidate cell. For example, the UE may measure/calculate a gap/difference between reception timings of DL signals between a reference cell and a candidate cell. Information about the reference cell/candidate cell may be indicated to the UE. As an example, the reference cell may be a source cell (or a serving cell).

When the reference cell (for example, the source cell/serving cell/specific candidate cell) and the candidate cell are asynchronized, the UE may apply a certain offset parameter in acquiring TA between the reference cell and the candidate cell. The certain offset parameter may be configured for the UE by higher layer configuration (for example, RRC configuration).

Note that the source cell need not transmit information/signaling for triggering/indicating UE based TA measurement to the UE. In this case, the UE may autonomously perform the UE based TA measurement, based on a higher layer parameter indicating configuration of UE based TA measurement.

When the UE has acquired TA, based on the UE based TA measurement, the UE may transmit certain signaling (or information) to the source cell (or reference cell)/target cell (or candidate cell).

The certain signaling (or information) may be applied to determination/notification of the reliability (or validity) of the TA acquired by the UE based TA measurement. For example, when the validity of TA obtained by UE based TA measurement is determined based on another condition/rule, notification of the reliability of the TA (or whether or not the TA is valid) may be made by certain signaling (or information).

The UE/network (or base station) may determine/notify the reliability (or validity) of the TA acquired by the UE based TA measurement, based on certain signaling. The certain signaling (or information) may be transmitted by using a MAC CE/UCI/PUCCH/PUSCH.

Note that a configuration in which the certain signaling (or information) is not transmitted may be adopted.

Next, the source cell may transmit a cell switch command to the UE. TA information (for example, information about validity of the TA acquired by the UE based TA measurement and the like) may be moved from the source cell to the target cell/the source cell may notify the target cell of the TA information. After the cell switching, the UE may control UL transmission, based on the TA acquired by the UE based TA measurement determined to be valid.

In FIG. 16, when the UE has acquired (for example, calculated/measured) the TA by the UE based TA measurement, the UE may apply at least one of option 1-1 to option 1-4 below (for example, individually or in combination). At least one of Option 1-1 to Option 1-4 may be performed by using certain signaling (or information).

### {Option 1-1}

The UE may report information (for example, a TA value) about the TA acquired by the UE based TA measurement to the network by using certain signaling (or information).

The certain signaling may be UCI/MAC CE (or PUCCH/PUSCH). For example, the UE may report the TA value by using a timing advance report MAC CE.

The network may be a current serving cell/SpCell/candidate cell (for example, a candidate cell not being a serving cell). For example, the UE may report information about the TA for at least one of the current serving cell, the SpCell, and the candidate cell (for example, a candidate cell not being a serving cell).

Determination/notification of validity of the TA acquired by the UE based TA measurement may be performed based on the TA reported from the UE to the network. For example, when the UE determines that the TA acquired by the UE based TA measurement is valid, TA reporting may notify that the TA is valid. In contrast, when the network side determines validity of the TA, validity of the TA may be determined based on the reported information about the TA (for example, the TA value).

### {Option 1-2}

The UE may transmit an acknowledgement signal/another indication to the network, for signaling/information for triggering/indicating the UE based TA measurement. The acknowledgement signal/other indication may be transmitted by using UCI/MAC CE.

The UE may perform control to transmit the acknowledgement signal/other indication within a certain time (for example, during certain time) after receiving the signaling for triggering/indicating the UE based TA measurement. The certain time may be defined in a specification or may be configured by the RRC/MAC CE.

The acknowledgement signal (for example, HARQ-ACK) may be an ACK or a NACK.

The network may be a current serving cell/SpCell/candidate cell (for example, a candidate cell not being a serving cell). For example, the UE may transmit an acknowledgement signal/another indication for signaling for triggering the UE based TA measurement to at least one of the current serving cell, the SpCell, and a candidate cell (for example, a candidate cell not being a serving cell).

Validity of the TA acquired by the UE based TA measurement may be determined/notified by an acknowledgement signal/another indication for the signaling for trigger/indication, which is transmitted from the UE. For example, when the UE determines that TA acquired by the UE based TA measurement is valid, the acknowledgement signal/other indication may notify that the TA is valid/invalid. When the network side determines validity of the TA, the validity of the TA may be determined based on the content of the transmitted acknowledgement signal/other indication.

### {Option 1-3}

The UE may request start/stop of a certain timer (for example, time alignment timer) associated with the TA acquired by the UE based TA measurement.

For example, the UE may transmit, to the network, certain signaling (or information) requesting start/stop of a certain timer. The certain signaling may be UCI/MAC CE (or PUCCH/PUSCH). The network may be at least one of a current serving cell, an SpCell, a candidate cell (for example, a candidate cell not being a serving cell).

The validity of the TA acquired by the UE based TA measurement may be determined/notified by a start/stop request of a certain timer transmitted from the UE. For example, when the UE determines that the TA acquired by the UE based TA measurement is valid, the start request/stop request of the certain timer may notify that the TA is valid/invalid. When the validity of the TA is determined on the network side, the validity of the TA may be determined based on the start request/stop request of the certain timer.

### {Option 1-4}

When the UE acquires the TA by the UE based TA measurement, the UE may perform control so as not to perform anything (for example, not to transmit certain signaling (or information)).

In option 1-1 to option 1-4, the UE may indicate/report, to the network, information about a candidate cell associated with the TA acquired by the UE based TA measurement. The information about the candidate cell associated with the TA acquired by the UE based TA measurement may be included in certain signaling, or may be included in any UCI/MAC CE (or PUCCH/PUSCH) transmitted by the UE.

In this way, the validity of the TA acquired by the TA measurement may be determined/notified based on the certain signaling reported/transmitted from the UE to the network. With this, the TA acquired by the TA measurement can be appropriately used.

At least one of option 1-1 to option 1-4 may be applied to each of case 1-1 (case 1-1A/B)/case 1-2 (case 1-2A/B)/case 1-3 (case 1-3A/B) below.

### {Case 1-1}

Case 1-1 corresponds to a case where TA acquired by UE based TA measurement is valid.

Whether or not the TA acquired by the UE based TA measurement is valid may be determined based on a certain rule/condition. For example, the UE/network may determine whether or not the TA acquired by the UE based TA measurement is valid, based on the certain rule/condition.

### <<Case 1-1A>>

In a case where a first cell (for example, a source/reference cell) and a second cell (for example, a target/candidate cell) are synchronized, at least one of option 1-1/option 1-2/option 1-3/option 1-4 above (for example, individually or in combination) may be applied.

For example, the UE may report information (for example, a TA value) about the TA acquired by the UE based TA measurement to the network by using certain signaling (for example, a timing advance report MAC CE/UCI) (option 1-1).

The UE may transmit ACK/another indication to the network for the signaling/information for triggering/indicating the UE based TA measurement (option 1-2). The ACK/other indication may be transmitted by the UCI/MAC CE. The UE may transmit the ACK and also perform the UE based TA measurement. The network (for example, the base station) may determine that the TA acquired by the UE based TA measurement is valid, based on the ACK/other indication transmitted from the UE.

The UE may request start of a certain timer (for example, a time alignment timer) associated with the TA acquired by the UE based TA measurement (option 1-3). The request of start of the certain timer (for example, the time alignment timer) may be made by UCI/MAC CE.

When the UE acquires the TA by the UE based TA measurement, the UE may perform control so as not to perform anything (for example, not to transmit certain signaling (or information)) (option 1-4). In this case, not performing anything (for example, not transmitting certain signaling (or information)) may mean that the TA acquired by the UE based TA measurement is valid.

### <<Case 1-1B>>

In a case where a first cell (for example, a source/reference cell) and a second cell (for example, a target/candidate cell) are asynchronized, at least one of option 1-1/option 1-2/option 1-3/option 1-4 above (for example, individually or in combination) may be applied.

For example, the UE may report information (for example, a TA value) about the TA acquired by the UE based TA measurement to the network by using certain signaling (for example, a timing advance report MAC CE/UCI) (option 1-1).

The UE may transmit ACK/another indication to the network for the signaling/information for triggering/indicating the UE based TA measurement (option 1-2). The ACK/other indication may be transmitted by the UCI/MAC CE. The network (for example, the base station) may determine that the TA acquired by the UE based TA measurement is valid, based on the ACK/other indication transmitted from the UE.

The UE may request start of a certain timer (for example, a time alignment timer) associated with the TA acquired by the UE based TA measurement (option 1-3). The request of start of the certain timer (for example, the time alignment timer) may be made by UCI/MAC CE.

When the UE acquires the TA by the UE based TA measurement, the UE may perform control so as not to perform anything (for example, not to transmit certain signaling (or information)) (option 1-4). In this case, not performing anything (for example, not transmitting certain signaling (or information)) may mean that the TA acquired by the UE based TA measurement is valid.

Alternatively, the UE need not assume case 1-1B. In other words, in the case where the first cell (for example, a source/reference cell) and the second cell (for example, a target/candidate cell) are asynchronized, the TA acquired by the UE based TA measurement may be determined/decided to always be invalid (not valid).

### <<Variations>>

In case 1-1A/1-1B, the UE may report a differential value between DL reference timings (for example, a differential value of the reception timings of DL signals between a reference cell and a candidate cell), and the network may determine whether or not the cells are synchronized. In this case, the network may indicate certain UE operation (for example, at least one of option 1-1 to option 1-4) by any DCI/MAC CE.

### {Case 1-2}

Case 1-2 corresponds to a case where TA acquired by UE based TA measurement is invalid (not valid).

Whether or not the TA acquired by the UE based TA measurement is invalid may be determined based on a certain rule/condition. For example, the UE/network may determine whether or not the TA acquired by the UE based TA measurement is invalid, based on the certain rule/condition.

### <<Case 1-2A>>

In a case where a first cell (for example, a source/reference cell) and a second cell (for example, a target/candidate cell) are synchronized, at least one of option 1-1/option 1-2/option 1-3/option 1-4 above (for example, individually or in combination) may be applied.

For example, the UE may report information (for example, a TA value) about the TA acquired by the UE based TA measurement to the network by using certain signaling (for example, a timing advance report MAC CE/UCI) (option 1-1).

The UE may transmit a NACK/another indication to the network for the signaling/information for triggering/indicating the UE based TA measurement (option 1-2). The NACK/other indication may be transmitted by the UCI/MAC CE. When the UE transmits the NACK, the UE may perform the UE based TA measurement or may perform control so as not to perform the UE based TA measurement. The network (for example, the base station) may determine that the TA acquired by the UE based TA measurement is invalid (not valid), based on the NACK/other indication transmitted from the UE. In this case, the base station may perform control to perform another TA acquisition (for example, RACH based TA acquisition or PDCCH order transmission).

The UE may request stop of a certain timer (for example, a time alignment timer) associated with the TA acquired by the UE based TA measurement (option 1-3). The request to stop the certain timer (for example, time alignment timer) may be made by UCI/MAC CE.

When the UE acquires the TA by the UE based TA measurement, the UE may perform control so as not to perform anything (for example, not to transmit certain signaling (or information)) (option 1-4). In this case, not performing anything (for example, not transmitting certain signaling (or information)) may mean that the TA acquired by the UE based TA measurement is invalid (not valid).

Alternatively, the UE need not assume case 1-2A. In other words, in the case where the first cell (for example, a source/reference cell) and the second cell (for example, a target/candidate cell) are synchronized, the TA acquired by the UE based TA measurement may be determined/decided to always be valid.

### <<Case 1-2B>>

In a case where a first cell (for example, a source/reference cell) and a second cell (for example, a target/candidate cell) are asynchronized, at least one of option 1-1/option 1-2/option 1-3/option 1-4 above (for example, individually or in combination) may be applied.

For example, the UE may report information (for example, a TA value) about the TA acquired by the UE based TA measurement to the network by using certain signaling (for example, a timing advance report MAC CE/UCI) (option 1-1).

The UE may transmit a NACK/another indication to the network for the signaling/information for triggering/indicating the UE based TA measurement (option 1-2). The NACK/other indication may be transmitted by the UCI/MAC CE. When the UE transmits the NACK, the UE may perform the UE based TA measurement or may perform control so as not to perform the UE based TA measurement. The network (for example, the base station) may determine that the TA acquired by the UE based TA measurement is invalid (not valid), based on the NACK/other indication transmitted from the UE. In this case, the base station may perform control to perform another TA acquisition (for example, RACH based TA acquisition or PDCCH order transmission).

The UE may request stop of a certain timer (for example, a time alignment timer) associated with the TA acquired by the UE based TA measurement (option 1-3). The request to stop the certain timer (for example, time alignment timer) may be made by UCI/MAC CE.

When the UE acquires the TA by the UE based TA measurement, the UE may perform control so as not to perform anything (for example, not to transmit certain signaling (or information)) (option 1-4). In this case, not performing anything (for example, not transmitting certain signaling (or information)) may mean that the TA acquired by the UE based TA measurement is invalid (not valid).

### <<Variations>>

In case 1-2A/1-2B, the UE may report a differential value between DL reference timings (for example, a differential value of the reception timings of DL signals between a reference cell and a candidate cell), and the network may determine whether or not the cells are synchronized. In this case, the network may indicate certain UE operation (for example, at least one of option 1-1 to option 1-4) by any DCI/MAC CE.

### {Case 1-3}

Case 1-3 corresponds to a case where it is not clear in the UE whether or not TA acquired by UE based TA measurement is valid (or a case where it is not possible for the UE to determine whether or not TA acquired by UE based TA measurement is valid).

Whether or not the TA acquired by the UE based TA measurement is valid may be determined based on a certain rule/condition. For example, whether the TA acquired by the UE based TA measurement is valid/invalid may be determined based on the certain rule/the certain condition/reporting from the UE or the like.

### <<Case 1-3A>>

In a case where a first cell (for example, a source/reference cell) and a second cell (for example, a target/candidate cell) are synchronized, at least one of option 1-1/option 1-2/option 1-3/option 1-4 above (for example, individually or in combination) may be applied.

For example, the UE may report information (for example, a TA value) about the TA acquired by the UE based TA measurement to the network by using certain signaling (for example, a timing advance report MAC CE/UCI) (option 1-1).

The UE may transmit a NACK/another indication to the network for the signaling/information for triggering/indicating the UE based TA measurement (option 1-2). The NSCK/other indication may be transmitted by the UCI/MAC CE. The network (for example, the base station) may determine whether or not the TA acquired by the UE based TA measurement is valid, based on the NACK/other indication transmitted from the UE. In this case, the base station may notify the UE of the determination result (for example, that the TA acquired by the UE based TA measurement is valid). Note that a NACK may be interpreted as an ACK.

The UE may request stop of a certain timer (for example, a time alignment timer) associated with the TA acquired by the UE based TA measurement (option 1-3). The request to stop the certain timer (for example, time alignment timer) may be made by UCI/MAC CE.

When the UE acquires the TA by the UE based TA measurement, the UE may perform control so as not to perform anything (for example, not to transmit certain signaling (or information)) (option 1-4). In this case, not performing anything (for example, not transmitting certain signaling (or information)) may mean that it is not clear on the UE side whether or not the TA acquired by the UE based TA measurement is valid (or it is not possible to determine on the UE side whether or not the TA is valid).

Alternatively, the UE need not assume case 1-3A. In other words, in the case where the first cell (for example, a source/reference cell) and the second cell (for example, a target/candidate cell) are synchronized, the TA acquired by the UE based TA measurement may be determined/decided to always be valid.

### <<Case 1-3B>>

In a case where a first cell (for example, a source/reference cell) and a second cell (for example, a target/candidate cell) are asynchronized, at least one of option 1-1/option 1-2/option 1-3/option 1-4 above (for example, individually or in combination) may be applied.

For example, the UE may report information (for example, a TA value) about the TA acquired by the UE based TA measurement to the network by using certain signaling (for example, a timing advance report MAC CE/UCI) (option 1-1).

The UE may transmit a NACK/another indication to the network for the signaling/information for triggering/indicating the UE based TA measurement (option 1-2). The NACK/other indication may be transmitted by the UCI/MAC CE. The network (for example, the base station) may determine whether or not the TA acquired by the UE based TA measurement is valid, based on the NACK/other indication transmitted from the UE. In this case, the base station may notify the UE of the determination result (for example, that the TA acquired by the UE based TA measurement is valid). Note that a NACK may be interpreted as an ACK.

The UE may request stop of a certain timer (for example, a time alignment timer) associated with the TA acquired by the UE based TA measurement (option 1-3). The request to stop the certain timer (for example, time alignment timer) may be made by UCI/MAC CE.

When the UE acquires the TA by the UE based TA measurement, the UE may perform control so as not to perform anything (for example, not to transmit certain signaling (or information)) (option 1-4). In this case, not performing anything (for example, not transmitting certain signaling (or information)) may mean that it is not clear on the UE side whether or not the TA acquired by the UE based TA measurement is valid (or it is not possible to determine on the UE side whether or not the TA is valid).

Alternatively, the UE need not assume case 1-3B In other words, in the case where the first cell (for example, a source/reference cell) and the second cell (for example, a target/candidate cell) are asynchronized, the TA acquired by the UE based TA measurement may be determined/decided to always be invalid (not valid).

### <<Variations>>

In case 1-3A/1-3B, the UE may report a differential value between DL reference timings (for example, a differential value of the reception timings of DL signals between a reference cell and a candidate cell), and the network may determine whether or not the cells are synchronized. In this case, the network may indicate certain UE operation (for example, at least one of option 1-1 to option 1-4) by any DCI/MAC CE.

### {Option 2}

Option 2 relates to an example of a method of determining/deciding whether or not TA acquired by UE based TA measurement is valid. Option 2 may be applied in combination with each case/each option described above. Note that the validity determination of the TA in option 2 may be applied only at the timing when the UE calculates/measures the TA.

At least one of a network (for example, a base station) and a UE may determine whether or not the TA acquired by the UE based TA measurement is valid. Whether or not the TA acquired by the UE based TA measurement is valid may be determined based on a certain rule/certain condition. At least one of the UE and the network (for example, the base station) may determine whether or not the TA acquired by the UE based TA measurement is valid, based on the certain rule/certain condition.

As a method of determining/deciding whether or not the TA acquired by the UE based TA measurement is valid, at least one of option 2-1 and option 2-2 below may be applied.

Each option may be applied to each of a case where a first cell (for example, a source/reference cell) and a second cell (for example, a target/candidate cell) are synchronized and a case where the first cell (for example, a source/reference cell) and the second cell (for example, a target/candidate cell) are asynchronized. To the synchronized case and the asynchronized case, the same option or different options may be applied.

### {Option 2-1}

The network (for example, the base station) may determine whether or not the TA acquired by the UE based TA measurement is valid.

The network (for example, the base station) may determine whether or not the TA acquired by the UE based TA measurement is valid, based on at least one of a certain rule, a certain condition, and reporting/signaling from the UE.

For example, the network (for example, the base station) may determine, based on information about TA reported from the UE (for example, a TA value obtained by the UE based TA measurement), validity of the TA. For example, when the TA value is equal to or larger than a certain threshold, the base station may determine that the TA obtained by the UE based TA measurement is valid.

For example, the network (for example, the base station) may transmit signaling for indicating trigger of UE based TA measurement, and may determine validity of the TA, based on a signal (for example, an acknowledgement signal/another signal) for the signaling.

For example, in a case where the first cell (for example, a source/reference cell) and the second cell (for example, a target/candidate cell) are asynchronized, the network (for example, the base station) may determine that the TA acquired by the UE based TA measurement is not valid.

In a case where the first cell (for example, a source/reference cell) and the second cell (for example, a target/candidate cell) are synchronized, the network (for example, the base station) may determine that the TA acquired by the UE based TA measurement is valid. Alternatively, in the case where the first cell (for example, a source/reference cell) and the second cell (for example, a target/candidate cell) are synchronized, the network (for example, the base station) may determine whether or not the TA acquired by the UE based TA measurement is valid, based on another condition/reporting from the UE or the like.

Whether or not the TA acquired by the UE based TA measurement is valid may be determined based on a synchronization state between the first cell (for example, a source/reference cell) and the second cell (for example, a target/candidate cell), or may be determined based on another condition or the like regardless of the synchronization state.

As described above, when the validity of the TA is determined by the network, a timer may be configured to control a validity duration for determining the validity. For example, a timer may be started when the network indicates the UE to perform UE based TA measurement. When the timer expires, the UE may perform the UE based TA measurement again without an indication from the network.

For example, when the network determines that the TA is invalid (not valid), the network may stop the timer. The network may not stop the timer when the validity of the TA value is not recognized. Note that the timer is described in embodiments (for example, a first/second embodiment) described below.

### {Option 2-2}

The UE may determine whether or not TA acquired by UE based TA measurement is valid.

The UE may determine whether or not the TA acquired by the UE based TA measurement is valid, based on at least one of certain rules and certain conditions. For example, at least one of the certain rules and the certain conditions may be the content of the UE based TA measurement (for example, a timing difference of DL signals between candidate cells, a TA value to be calculated/measured, or the like), or may be another rule/condition. The UE may use at least one of option 2-2-1 to option 2-2-4 below.

### <<Option 2-2-1>>

The UE may determine whether or not the TA is valid based on a result (for example, the TA value) calculated/measured by the UE based TA measurement.

As an example, when the TA value obtained by the calculation/measurement by the UE based TA measurement is equal to or larger than a certain threshold, the UE may determine that the TA obtained by the UE based TA measurement is valid. The certain threshold may be a value configured by DCI/MAC CE/RRC, a value defined in a specification, or a value determined based on UE capability.

When the TA value obtained by the calculation/measurement by the UE based TA measurement is smaller than the certain threshold, the UE may determine that the TA obtained by the UE based TA measurement is invalid (or not valid).

Alternatively, when the TA value obtained by calculation/measurement by the UE based TA measurement is equal to or larger than a certain threshold, the UE may determine that the TA obtained by the UE based TA measurement is invalid (or not valid). When the TA value calculated/measured by the UE based TA measurement is smaller than the certain threshold, the UE may determine that the TA obtained by the UE based TA measurement is valid.

Note that, when the TA measured by the UE becomes invalid (is not valid), the UE may perform UE based TA measurement and update the TA value.

### <<Option 2-2-2>>

When the UE can obtain a TA value (for example, can calculate/measure the TA value) by the UE based TA measurement, the UE may determine that the TA is valid. In other words, when the UE can acquire a TA value by the UE based TA measurement, the UE may always determine that the TA value is valid regardless of calculation/measurement result.

### <<Option 2-2-3>>

The UE may determine whether or not the TA is valid, based on the maximum value of a timing difference of UL transmissions between candidate cells (for example, a Maximum uplink transmission timing difference).

For example, when the maximum value of the timing difference of UL transmissions between candidate cells (or the maximum timing difference of UL transmissions between candidate cells) is larger than a certain threshold/exceeds the certain threshold, the UE may determine that the TA obtained by the UE based TA measurement is invalid (or not valid). The certain threshold may be a value configured by DCI/MAC CE/RRC, a value defined in a specification, or a value determined based on UE capability.

The UE may acquire the maximum value of the timing difference of UL transmissions between candidate cells (or the maximum timing difference of UL transmissions between candidate cells), based on the content of the UE based TA measurement (for example, a TA value obtained by calculation/measurement, a timing difference of DL signals between cells, or the like). Alternatively, the UE may be notified by the base station of the maximum value of the timing difference of UL transmissions between candidate cells (or the maximum timing difference of UL transmissions between candidate cells).

### <<Option 2-2-4>>

The UE may determine whether or not the TA is valid, based on a difference between DL reference timings. The difference between DL reference timings may be a difference between timings of receiving DL signals transmitted from respective candidate cells (for example, a source/reference cell and a target/candidate cell).

For example, when the difference between DL reference timings is larger than a certain threshold/exceeds the certain threshold, the UE may determine that the TA obtained by the UE based TA measurement is invalid (or not valid). The certain threshold may be a value configured by DCI/MAC CE/RRC, a value defined in a specification, or a value determined based on UE capability.

At least one of options 2-2-1 to 2-2-3 may be applied to a case in which the first cell (for example, a source/reference cell) and the second cell (for example, a target/candidate cell) are synchronized, and at least one of options 2-2-1 to 2-2-4 may be applied to a case in which the first cell and the second cell are asynchronized. In other words, option 2-2-4 may be applied only to the case of asynchronized. Of course, applicable cases are not limited to this.

### {Synchronization/Asynchronization Between Candidate Cells}

Whether a plurality of candidate cells are synchronized or asynchronized may be determined based on a certain rule/certain condition. The plurality of candidate cells may include at least one (or both) of a first cell (for example, a source/reference cell) and a second cell (for example, a target/candidate cell). Whether the plurality of candidate cells are synchronized or asynchronized may be determined based on option 3-1 and option 3-3 below. Option 3-1 to option 3-3 may be applied in the zero-th embodiment.

### <<Option 3-1>>

Synchronization/asynchronization between cells may be determined based on a difference between DL reference timings. The difference between DL reference timings may be a difference between timings of receiving DL signals transmitted from respective candidate cells (for example, a source/reference cell and a target/candidate cell).

For example, when the difference between the DL reference timings is larger than a certain threshold/exceeds the certain threshold, the UE/network may determine that the cells are asynchronized (or not synchronized). The certain threshold may be a value configured by DCI/MAC CE/RRC, a value defined in a specification, or a value determined based on UE capability.

### <<Option 3-2>>

A candidate cell not being a serving cell may always be considered to be asynchronized with the current serving cell. The UE/network may assume/determine that the candidate cell not being the serving cell is asynchronized with the current serving cell.

### <<Option 3-3>>

Synchronization/asynchronization between a plurality of candidate cells may be configured/indicated by DCI/MAC CE/RRC. The UE may determine the synchronization/asynchronization between a plurality of candidate cells, based on the configuration/indication of the DCI/MAC CE/RRC.

According to the above-described zero-th embodiment, the UE can appropriately determine the validity of the TA acquired by UE based TA measurement.

### <First Embodiment>

A first embodiment relates to the above-described analyses 1 and 2, and the meaning (definition) of a TA being invalid and a condition for a UE to trigger the TA reporting will be described.

In the above-described zero-th embodiment, a case is described in which the UE performs validity determination for the TA at the timing when the TA is calculated/measured. On the other hand, it is assumed that, even when the acquired TA (at the time of measurement) is determined to be valid at that time, the valid TA may become invalid with the lapse of time.

Therefore, in the present embodiment, the validity of the TA after a certain time has elapsed since the measurement, in other words, a case/condition in which the TA becomes invalid will be described.

In the present disclosure, the TA being invalid (not valid) may mean that the measured/acquired TA value itself is not an accurate value. On the other hand, the TA being valid may mean that the measured/acquired TA value itself is an accurate value.

The following options 1 to 4 relate to the validity of the TA (in particular, the definition of being invalid).

### {Option 1}

A certain timer may be introduced to determine the validity of the TA. The timer may be referred to as a time alignment timer. A UE/network may determine the validity of the TA, based on a timer that is a determination criterion (criteria) of the TA validity. The timer may be associated with a TA/TAG/candidate cell configured/indicated by RRC/MAC CE. When the timer expires, the TA becomes invalid. In other words, the UE/network may determine that the TA is invalid when the timer expires.

### {Option 2}

A certain threshold value may be introduced as a determination criterion for the TA validity. The UE/network may determine the validity of the TA, based on the threshold value. The threshold value may be a value related to L1-RSRP/SINR The threshold value may be configured/indicated by RRC/MAC CE/DCI or may be determined in advance in a specification.

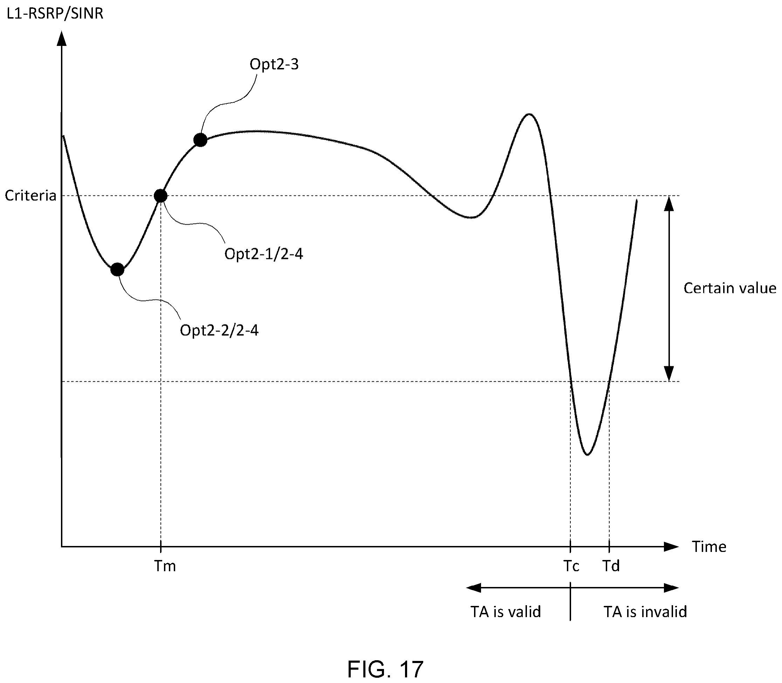

FIG. 17 is a diagram to show an example of determination criterion for the TA validity according to option 2. In option 2, the threshold value (certain value) may have a certain width (range).

For example, when L1-RSRP/SINR associated with a candidate cell corresponding to the measured/acquired TA varies (increases or decreases) by a value over (the range of) the threshold value, the TA may be invalid. In other words, the UE/network may determine that the TA is invalid when the L1-RSRP/SINR associated with the measured/acquired TA varies significantly relative to the threshold value.

In other words, the UE/network may determine that the TA is valid even when the measured/acquired L1-RSRP/SINR associated with the TA varies over certain time, as long as the magnitude of the variation does not exceed (the range of) the threshold value.

To be more specific, as shown in FIG. 17, at the timing of time Tc, when the measured/acquired L1-RSRP/SINR associated with the TA falls outside the range of the threshold value (falls below the lower limit of the threshold value), the UE/network may determine that the TA is (becomes) invalid.

In this case, the UE/network may determine that the TA is valid before the time Tc and may determine that the TA is invalid after the timing Tc. In other words, the time Tc is a timing at which the determination result for the TA validity is switched.

In FIG. 17, at the timing of time Td after time Tc, a corresponding L1-RSRP/SINR value changes to be within the range of the threshold value. In this case, the UE/network may determine that the TA that has been determined to be invalid once is valid. In this way, by determining (updating) the TA validity, based on the comparison between the change of the value of the L1-RSRP/SINR and the threshold value, it is possible to flexibly control the determination of the TA validity.

Alternatively, even when the value of corresponding L1-RSRP/SINR changes to be within the range of the threshold value at the timing of time Td after time Tc, the UE/network may not update the determination result of the TA that has been determined to be invalid once (may not determine to be valid). Maintaining the result of the determination once enables reduction of processing load of the UE/network and communication overhead. For example, when a sudden change in the value of the L1-RSRP/SINR may occur, it is possible to reduce an unnecessary processing load of the UE/network by uniformly fixing the determination result.

Hereinafter, specific examples of the determination criteria in options 2-1 to 2-4 will be described with reference to FIG. 17. As described above, in option 2, the threshold value may include a certain range from the determination criterion. FIG. 17 shows the certain range (threshold value) corresponding to the determination criterion in option 2-1/2-4.

### <<Option 2-1>>

The value of L1-RSRP/SINR used as the determination criterion may be a measured result (of the L1-RSRP/SINR) at the timing of time L1 when the TA is measured/acquired.

### <<Option 2-2>>

The value of L1-RSRP/SINR used as the determination criterion may be a (latest) measured result before the timing of time Tm at which the TA is measured/acquired.

### <<Option 2-3>>

The value of L1-RSRP/SINR used as the determination criterion may be a (latest) measured result after the timing of time Tm at which the TA is measured/acquired.

### <<Option 2-4>>

The value of L1-RSRP/SINR used as the determination criterion may be a measured result (of L1-RSRP/SINR) corresponding to an SSB used for calculation of the TA.

The determination criterion of above-described options 2-1 to 2-4 may be configured/indicated by RRC/MAC CE/DCI, may be determined in advance in a specification, or may be determined in advance based on UE capability.

### {Option 3}

A certain threshold value may be introduced as the determination criterion for the TA validity. The UE/network may determine the validity of the TA, based on the threshold value. The threshold value may be a value related to L1-RSRP/SINR The threshold value may be configured/indicated by RRC/MAC CE/DCI or may be determined in advance in a specification.

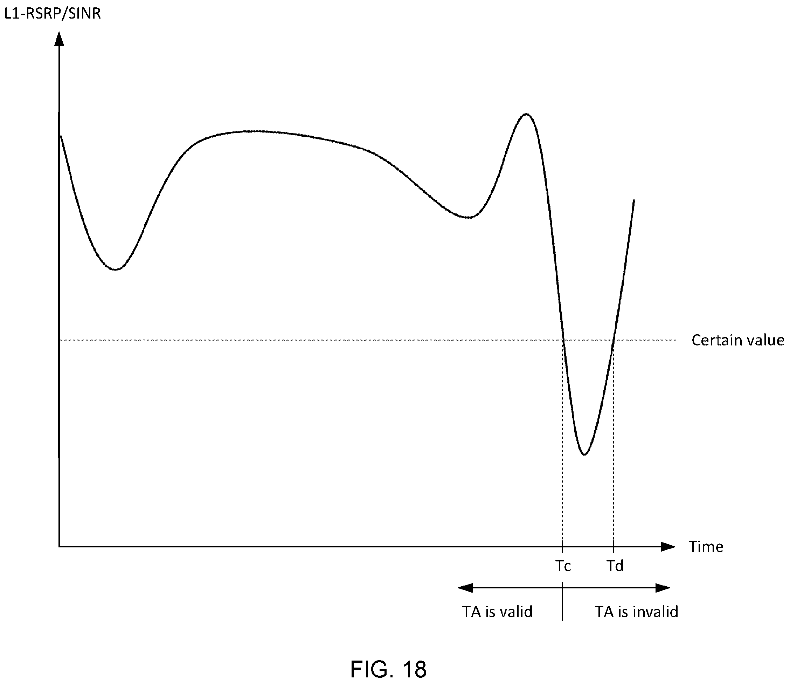

FIG. 18 is a diagram to show an example of determination criterion for the TA validity according to option 3. In option 3, the threshold value may indicate a certain value.

For example, when the L1-RSRP/SINR associated with the candidate cell corresponding to the measured/acquired TA is below the threshold value (smaller than the threshold value), the TA may be invalid. In other words, the UE/network may determine that the TA is invalid when the L1-RSRP/SINR associated with the measured/acquired TA changes significantly to fall below the threshold value.

In other words, the UE/network may determine that the TA is valid even when the L1-RSRP/SINR associated with the measured/acquired TA varies over certain time, as long as the value does not fall below the threshold value.

To be more specific, as shown in FIG. 18, at the timing of time Tc, when the measured/acquired L1-RSRP/SINR associated with the TA is lower than the threshold value (falls below the lower the threshold value), the UE/network may determine that the TA is invalid (becomes invalid).

In this case, the UE/network may determine that the TA is valid before time Tc and may determine that the TA is invalid after time Tc. In other words, the time Tc is a timing at which the determination result for the TA validity is switched.

In FIG. 18, at the timing of time Td after time Tc, a corresponding L1-RSRP/SINR value changes to exceed the threshold value. In this case, the UE/network may determine that the TA that has been determined to be invalid once is valid. In this way, by determining (updating) the TA validity, based on the comparison between the change of the value of the L1-RSRP/SINR and the threshold value, it is possible to flexibly control the determination of the TA validity.

Alternatively, even when the value of corresponding L1-RSRP/SINR changes to exceed the threshold value at the timing of time Td after time Tc, the UE/network may not update the determination result of the TA that has been determined to be invalid once (may not determine to be valid). Maintaining the result of the determination once enables reduction of processing load of the UE/network and communication overhead. For example, when a sudden change in the value of the L1-RSRP/SINR may occur, it is possible to reduce an unnecessary processing load of the UE/network by uniformly fixing the determination result.

### {Option 4}

In above-described option 2/3, when a plurality of beams are present (configured) for each candidate cell, following options 4-1 to 4-3 may be applied.

### <<Option 4-1>>

The L1-RSRP/SINR associated with the SSB used for the calculation of the TA may be referred to.

### <<Option 4-2>>

The L1-RSRP/SINR associated with the SSB of any of corresponding candidate cells may be referred to.

### <<Option 4-3>>

The L1-RSRP/SINR (averaged over time) filtered/averaged by all SSBs of the corresponding candidate cell may be referred to.

### {Option 5}

Option 5 relates to triggering of TA reporting.

The UE may trigger TA reporting, based on a condition of at least one of following options A to C.

### <<Option A>>

After UE based TA measurement based on configuration/indication from the NW is completed, the UE may trigger the TA reporting.

### <<Option B>>

After the UE determines the validity of the current TA (for example, when the UE moves or after a certain time elapses), the UE may trigger the TA reporting.

### <<Option C>>

Based on a configuration from the NW, the UE may trigger the TA reporting periodically/aperiodically.

According to the first embodiment described above, the determination of the TA validity is clear, and the UE can appropriately control the TA reporting.

### <Second Embodiment>

A second embodiment relates to analysis 3 described above, and describes validity of a TA after a certain time has elapsed since the TA is acquired (timer control in a case where the TA becomes invalid). In the second embodiment, a case in which a first cell (for example, a source/reference cell) and a second cell (for example, a target/candidate cell) are synchronized/asynchronized will be described.

The description of the second embodiment is divided into a case where the above-described certain timer (time alignment timer) has expired (options 1 to 4) and a case where the timer has not expired (options 5 to 9). Note that the timer may be associated with the TA acquired by UE based TA measurement.

Options 1 to 4 correspond to option 1 of the first embodiment, and assume a case where the TA is determined to be invalid due to expiration of the timer.

Options 5 to 9 correspond to option 2/3 of the first embodiment, and assume a case where the TA is determined to be invalid, based on a threshold value regardless of expiration of the timer (during the timer is running).

In each of the following options, a candidate cell associated with the TA may be configured/indicated by any signaling (higher layer signaling/physical layer signaling).

### {Option 1}

When the timer expires, the UE may request the NW to stop the timer. The request to stop may be implemented using DCI/MAC CE. In other words, unless the UE requests the timer to be stopped, the timer may be maintained on the NW side.

### {Option 2}

When the timer expires, the UE may do nothing. In other words, even when the timer expires, the timer may be maintained as it is. This option means a case where the UE waits for an indication from the network.

### {Option 3}

When the timer expires, the UE may re-acquire the TA by UE based TA measurement.

### {Option 4}

When the timer expires, the UE may request the NW to trigger TA acquisition/measurement. The TA acquisition/measurement may be performed using a RACH indicated/triggered by a PDCCH (for example, a PDCCH ordered RACH) or UE based TA measurement. The request may be performed using the DCI/MAC CE.

### {Option 5}

Even when the timer has not expired, when it is determined that the TA is invalid during the timer is running as in the first embodiment described above, the UE may request the NW to stop the timer. The request to stop may be implemented using the DCI/MAC CE. In other words, unless the UE requests the timer to be stopped, the timer may be maintained on the NW side.

### {Option 6}

Even when the timer has not expired, when it is determined that the TA is invalid during the timer is running as in the first embodiment described above, the UE may determine (consider) that the timer has expired. In other words, the timing at which the TA is determined to be invalid may be the timing at which the timer expires.

### {Option 7}

Even when the timer has not expired, when it is determined that the TA is invalid during the timer is running as in the first embodiment described above, the UE may do nothing. In other words, even when the timer expires, the timer may be maintained as it is. This option means a case where the UE waits for an indication from the network.

### {Option 8}

Even when the timer has not expired, when it is determined that the TA is invalid during the timer is running as in the first embodiment described above, the UE may re-acquire the TA by UE based TA measurement.

### {Option 9}

Even when the timer has not expired, when it is determined that the TA is invalid during the timer is running as in the first embodiment described above, the UE may request the NW to trigger TA acquisition/measurement. The TA acquisition/measurement may be performed using a RACH indicated/triggered by a PDCCH (for example, a PDCCH ordered RACH) or UE based TA measurement. The request may be performed using the DCI/MAC CE.

According to the second embodiment described above, the UE can appropriately control the timer when it is determined that the TA is invalid.

### <Third Embodiment>

A third embodiment relates to analysis 4 described above, and describes a case where a network determines validity of a TA. More specifically, in the third embodiment, a UE operation when the network determines the validity of the TA will be described.

Hereinafter, a condition for the UE to determine that the TA is valid (embodiment 3-1), a condition for the UE to determine that the TA is invalid (embodiment 3-2), and a specific operation of the UE based on the TA validity (embodiment 3-3) will be described separately. The embodiments can be applied in combination as appropriate.

### {Embodiment 3-1}

The UE may determine that the TA is valid when at least one condition of following options 1 to 6 is satisfied.

### <<Option 1>>

- The UE does not receive a specific signal during a certain duration. The certain duration may be configured/indicated by higher layer signaling/physical layer signaling, or may be defined in advance in a specification. The specific signal may be any signal/channel that triggers the TA acquisition/measurement for the same candidate cell.

### <<Option 2>>

- When the UE receives a cell switch command MAC CE (CSC MAC CE).

### <<Option 3>>

- When the UE receives a TAC MAC CE.

### <<Option 4>>

- When the UE does not receive the TAC MAC CE during a certain duration. The certain duration may be configured/indicated by higher layer signaling/physical layer signaling, or may be defined in advance in a specification.

### <<Option 5>>

- When the UE receives a specific signal. The specific signal may be any signal/channel that triggers the TA acquisition/measurement for different candidate cells.

### <<Option 6>>

- The UE may expect the TA to be always valid unconditionally.

### {Embodiment 3-2}

The UE may determine that the TA is invalid when at least one condition of following options 7 to 10 is satisfied.

### <<Option 7>>

- The UE receives a specific signal during a certain duration.
The certain duration may be configured/indicated by higher layer signaling/physical layer signaling, or may be defined in advance in a specification. The specific signal may be any signal/channel that triggers the TA acquisition/measurement for the same candidate cell.

### <<Option 8>>

- When the UE receives the TAC MAC CE during a certain duration. The certain duration may be configured/indicated by higher layer signaling/physical layer signaling, or may be defined in advance in a specification.

### <<Option 9>>

- When the UE does not receive the TAC MAC CE.

### <<Option 10>>

- When the UE does not receive the specific signal. The specific signal may be any signal/channel that triggers the TA acquisition/measurement for different candidate cells.

### {Embodiment 3-3}

The UE may apply at least one operation of options A to E when the following condition (whether the TA is valid) is satisfied. In other words, the UE may apply the operations of options A to E, based on the validity of the TA. Specifically, options A to B correspond to a case of the TA being valid, and options C to E correspond to a case of the TA being invalid.

### <<Option A>>

When the TA is valid, the UE may start a timer associated with the TA.

### <<Option B>>

When the TA is valid, the UE may maintain the corresponding TA.

### <<Option C>>

When the TA is invalid, the UE may stop a timer associated with the TA.

### <<Option D>>

When the TA is invalid, the UE may delete (delete) the corresponding TA.

### <<Option E>>

When the TA is invalid, the UE may perform UE based TA measurement.

According to the third embodiment described above, the UE operation can be appropriately controlled based on the validity of the TA determined by the network.

### <Fourth Embodiment>

A fourth embodiment relates to analyses 5 and 6 described above, and describes a case where a network triggers TA acquisition/measurement.

### {Embodiment 4-1}

In embodiment 4-1, a case where the TA is valid (the timer has not expired) is divided into following cases 1 to 3, and UE operation corresponding to each case will be described.

### <<Case 1>>

In case 1, a case is assumed where an indication of a candidate cell on which UE based TA measurement is performed is included in any signal/channel (for example, TAC MAC CE, PDCCH order, or the like) that triggers UE based TA measurement. In case 1, the UE operation in that case will be described by being classified into following options 1 to 4.

### <Option 1>

The UE may not expect a specific operation. This is because UE based TA measurement is triggered when the TA of the indicated candidate cell is determined to be valid by the UE. Note that whether the UE performs UE based TA measurement when the TA is still valid may be based on UE implementation.

### <Option 2>

The UE may perform UE based TA measurement on the indicated candidate cell. Examples of this option include a case in which a timer associated with the indicated candidate cell is shorter than a certain value/threshold value. The certain value/threshold value may be configured/indicated by higher layer signaling/physical layer signaling, or may be defined in advance in a specification.

### <Option 3>

The UE may not perform UE based TA measurement on the indicated candidate cell. Examples of this option include a case in which a timer associated with the indicated candidate cell is longer than a certain value/threshold value. The certain value/threshold value may be configured/indicated by higher layer signaling/physical layer signaling, or may be defined in advance in a specification.

### <Option 4>

The UE may determine (consider) that a timer associated with the indicated candidate cell has expired.

### <<Case 2>>

In case 2, a case is assumed where an indication of a candidate cell on which UE based TA measurement is performed is not included in any signal/channel (for example, TAC MAC CE, PDCCH order, or the like) that triggers UE based TA measurement. In case 2, the UE operation in that case will be described by being classified into following options 5 to 9.

### <Option 5>

The UE may not expect a specific operation. This is because UE based TA measurement is triggered when the TA of the candidate cell configured with UE based TA measurement is determined to be valid by the UE. Note that whether the UE performs UE based TA measurement when the TA is still valid may be based on UE implementation.

### <Option 6>

The UE may perform UE based TA measurement on all candidate cells configured with UE based TA measurement. Examples of this option include a case in which a timer associated with any candidate cell is shorter than a certain value/threshold value. The certain value/threshold value may be configured/indicated by higher layer signaling/physical layer signaling, or may be defined in advance in a specification.

### <Option 7>

The UE may perform UE based TA measurement on some candidate cells except for candidate cells for which the TA is determined to be valid (on the UE side). Examples of this option include a case in which a timer associated with any candidate cell is longer than a certain value/threshold value. The certain value/threshold value may be configured/indicated by higher layer signaling/physical layer signaling, or may be defined in advance in a specification.

### <Option 8>

The UE may not perform UE based TA measurement on all candidate cells configured with UE based TA measurement. Examples of this option include a case in which a timer associated with any candidate cell is longer than a certain value/threshold value. The certain value/threshold value may be configured/indicated by higher layer signaling/physical layer signaling, or may be defined in advance in a specification.

### <Option 9>

The UE may determine (consider) that the timer of the candidate cell configured with UE based TA measurement has expired.

### <<Case 3>>

In case 3, it is assumed that the UE receives a PDCCH order. In case 3, the UE operation in that case will be described by being classified into following options 10 to 12.

### <Option 10>

The UE may not perform a PDCCH order RACH. In other words, the UE may not be indicated/triggered with the RACH by the PDCCH. Examples of this option include a case in which a timer associated with the indicated candidate cell is longer than a certain value/threshold value. The certain value/threshold value may be configured/indicated by higher layer signaling/physical layer signaling, or may be defined in advance in a specification.

### <Option 11>

The UE may perform a PDCCH order RACH. In other words, the UE may be indicated/triggered with the RACH by the PDCCH. Examples of this option include a case in which a timer associated with the indicated candidate cell is shorter than a certain value/threshold value. The certain value/threshold value may be configured/indicated by higher layer signaling/physical layer signaling, or may be defined in advance in a specification.

### <Option 12>

The UE may not expect a specific operation. This is because the PDCCH order RACH is triggered when the TA of the candidate cell configured with UE based TA measurement is determined to be valid by the UE. Note that whether the UE performs the PDCCH order RACH when the TA is still valid may be based on UE implementation.

### <<Notes>>

Note that when the TA is invalid (the timer has expired), acquisition/measurement of each TA may be performed.

### {Embodiment 4-2}

In embodiment 4-2, a case where UE based TA measurement is in progress is divided into following cases 1 to 3, and UE operation corresponding to each case will be described.

### <<Case 1>>

In case 1, a case is assumed where an indication of a candidate cell on which UE based TA measurement is performed is included in any signal/channel (for example, TAC MAC CE, PDCCH order, or the like) that triggers UE based TA measurement. In case 1, the UE operation in that case will be described by being classified into following options 1 to 3.

### <Option 1>

The UE may not expect a specific operation. This is because UE based TA measurement is triggered when the TA of the indicated candidate cell is determined to be valid by the UE. Note that whether the UE performs (new) UE based TA measurement when UE based TA measurement is in progress may be based on UE implementation.

### <Option 2>

The UE may perform UE based TA measurement on the indicated candidate cell. In other words, the newly triggered UE based TA measurement may always be prioritized.

### <Option 3>

The UE may not perform UE based TA measurement on the indicated candidate cell. In other words, previously triggered UE based TA measurement may always be prioritized.

### <<Case 2>>

In case 2, a case is assumed where an indication of a candidate cell on which UE based TA measurement is performed is not included in any signal/channel (for example, TAC MAC CE, PDCCH order, or the like) that triggers UE based TA measurement. In case 2, the UE operation in that case will be described by being classified into following options 4 to 7.

### <Option 4>

The UE may not expect a specific operation. This is because UE based TA measurement is triggered when the TA of the candidate cell configured with UE based TA measurement is determined to be valid by the UE. Note that whether the UE performs (new) UE based TA measurement when UE based TA measurement is in progress may be based on UE implementation.

### <Option 5>

The UE may perform UE based TA measurement on all candidate cells configured with UE based TA measurement. In other words, the newly triggered UE based TA measurement may always be prioritized.

### <Option 6>

The UE may perform UE based TA measurement on some candidate cells except for the candidate cell in which UE based TA measurement is in progress.

### <Option 7>

The UE may not perform UE based TA measurement on all candidate cells configured with UE based TA measurement. In other words, previously triggered UE based TA measurement may always be prioritized.

### <<Case 3>>

In case 3, it is assumed that the UE receives a PDCCH order. In case 3, the UE operation in that case will be described by being classified into following options 8 to 10.

### <Option 8>

The UE may not perform a PDCCH order RACH. In other words, the UE may not be indicated/triggered with the RACH by the PDCCH. In this case, UE based TA measurement may always be prioritized.

### <Option 9>

The UE may perform a PDCCH order RACH. In other words, the UE may be indicated/triggered with the RACH by the PDCCH. In this case, the PDCCH order RACH may always be prioritized.

### <Option 10>

The UE may not expect a specific operation. This is because the PDCCH order RACH is triggered when the TA of the candidate cell configured with UE based TA measurement is determined to be valid by the UE. Note that whether the UE performs the PDCCH order RACH when UE based TA measurement is in progress may be based on UE implementation.

### <<Notes>>

Note that, when UE based TA measurement is not in progress, acquisition/measurement of each TA may be performed.

According to the fourth embodiment described above, the UE operation can be controlled in a case where the network triggers the acquisition/measurement of the TA.

### <Fifth Embodiment>

A fifth embodiment relates to analysis 7 described above, and describes a TA indication in UE based TA measurement.

A UE may expect different TA indication methods in a cell switch command when different configurations are applied for TA acquisition/measurement method. The indication method of the different TAs may be defined in advance. Specific examples thereof will be described below in options 1 to 4.

### {Option 1}

In a cell switch command MAC CE, an absolute TA value including TA = 0 may be indicated. In this case, the UE may assume that the TA of an indicated candidate cell is the indicated absolute TA value.

### {Option 2}

In the cell switch command MAC CE, a TAG ID/cell ID corresponding to the TA to be applied may be indicated. In this case, the UE may assume that the TA of the indicated candidate cell is the TA value corresponding to the indicated TAG ID/cell ID.

### {Option 3}

The UE may be indicated in the cell switch command MAC CE to directly apply the TA acquired by UE based TA measurement. In this case, the UE may perform UE based TA measurement to acquire the TA of the indicated candidate cell.

### {Option 4}

In a case where UE based TA measurement is configured, at least one of above-described options 1 to 3 may be defined in advance. In other words, the TA may not be explicitly indicated by the cell switch command MAC CE.

According to the fifth embodiment described above, the indication of the TA can be appropriately controlled.

### <Sixth Embodiment>

A sixth embodiment relates to analysis 8 described above, and describes a UE operation in a case where a TA is indicated by a cell switch command MAC CE. A UE may apply at least one operation of following options 1 to 3.

### {Option 1}

The UE may apply an absolute TA value indicated in the cell switch command MAC CE.

### {Option 2}

The UE may apply a TA acquired/measured by the UE itself.

### {Option 3}

The UE may apply a TA associated with a longer timer among a plurality of indicated TAs. For example, when a plurality of TA acquisition methods are configured for a candidate cell, a timer associated with each TA acquisition method may be configured. More specifically, a RAR and a PDCCH order RACH without UE based TA measurement are exemplified.

According to the sixth embodiment described above, in a case where the TA is indicated by the cell switch command MAC CE, the UE operation can be appropriately controlled.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments (or options in the embodiments) may be applied only to a UE that has reported a specific UE capability or that supports the specific UE capability.

The specific UE capability may indicate at least one of the following:
- supporting of specific processing/operation/control/information (for example, UE based TA measurement) for at least one of the embodiments above
- supporting of specific processing/operation/control/information for at least one of options (or alternatives) or a combination of options of the above embodiments.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating that the random access procedure/PRACH transmission without RAR monitoring is enabled, any RRC parameter for a specific release (for example, Rel. 18/19), or the like.

When the UE does not support at least one of the specific UE capabilities above or is not configured with the specific information, operation of Rel. 15/16/17 may be applied, for example.

### (Supplementary Notes)

Regarding one embodiment (first to third embodiments) of the present disclosure, the following supplementary notes of the invention will be given.

### {Supplementary Note 1}

A terminal including:
a control section that performs UE-based timing advance measurement for a candidate cell; and
a receiving section that receives a configuration related to a timer or a threshold value for determining validity of a timing advance obtained by the UE-based timing advance measurement, wherein
the control section determines the validity of the timing advance, based on the configuration.

### {Supplementary Note 2}

The terminal according to supplementary note 1, wherein the control section determines validity of a timing advance that is a certain time after measurement of the timing advance.

### {Supplementary Note 3}

The terminal according to supplementary note 1 or 2, wherein the control section determines that the timing advance is invalid when the timer expires or a measured value of the timing advance is out of the range of threshold.

### {Supplementary Note 4}

The terminal according to any one of supplementary notes 1 to 3, wherein the control section determines the validity of the timing advance according to whether or not a specific signal is received within a certain time.

### (Supplementary Notes)

Regarding one embodiment (fourth to sixth embodiments) of the present disclosure, the following supplementary notes of the invention will be given.

### {Supplementary Note 1}

A terminal including:
a receiving section that receives a signal for triggering UE-based timing advance measurement; and
a control section that performs the UE-based timing advance measurement for a candidate cell, based on the signal, wherein
the control section controls performing of the UE-based timing advance measurement, based on whether or not the signal includes an indication of the candidate cell for performing the UE-based timing advance measurement, or based on reception of a physical downlink control channel order.

### {Supplementary Note 2}

The terminal according to supplementary note 1, wherein the control section determines validity of the timing advance, and when determining that the timing advance is valid, determines to perform the UE-based timing advance measurement, based on a timer associated with the candidate cell.

### {Supplementary Note 3}

The terminal according to supplementary note 1 or 2, wherein the control section determines the UE-based timing advance measurement to be triggered, based on whether or not any UE-based timing advance measurement is in progress.

### {Supplementary Note 4}

The terminal according to any one of supplementary notes 1 to 3, wherein
the receiving section receives a cell switch command, and
the control section controls the timing advance, based on information related to a timing advance included in the cell switch command.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

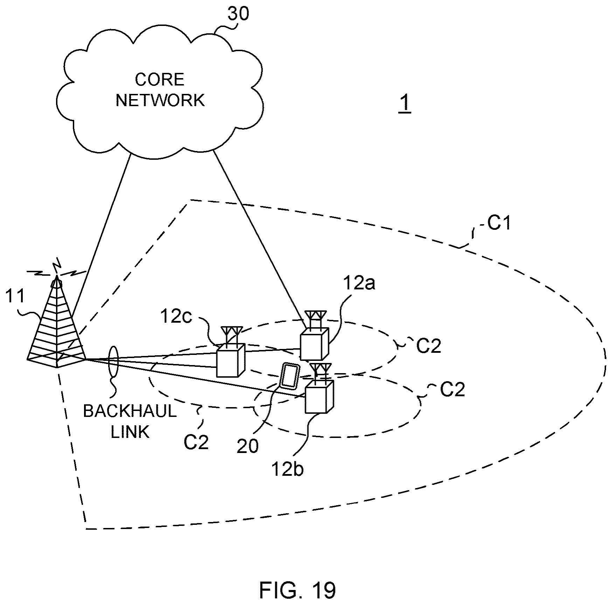

FIG. 19 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and the like.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

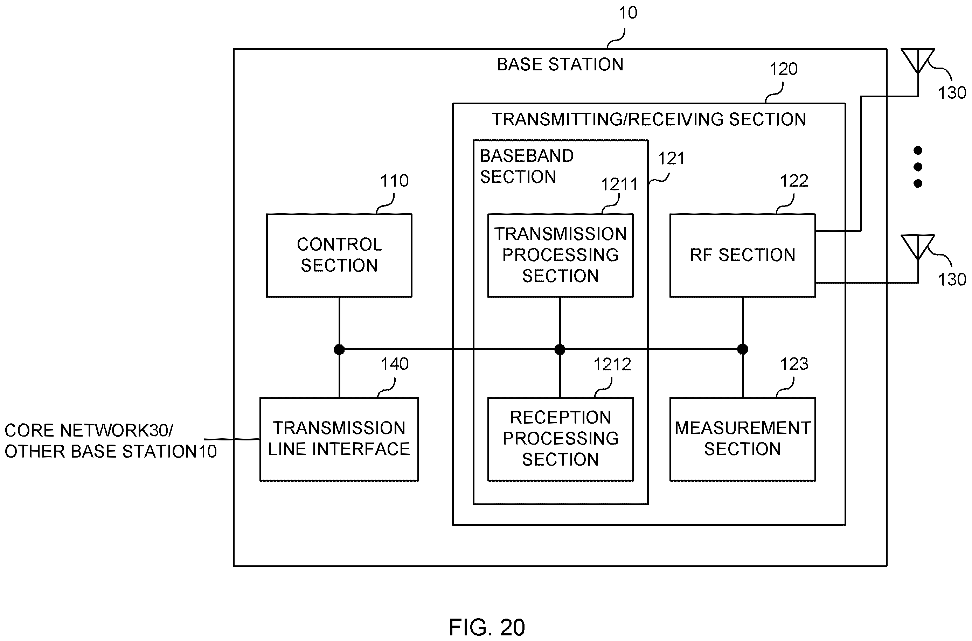

FIG. 20 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam or a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit a configuration related to a timer or a threshold value for determining validity of a timing advance obtained by UE-based timing advance measurement for a candidate cell. The transmitting/receiving section 120 may transmit a signal for triggering UE-based timing advance measurement for a candidate cell or a physical downlink control channel order. The transmitting/receiving section 120 may receive, from the terminal, the UE-based timing advance measurement acquired, based on the signal.

The control section 110 may determine the validity of the timing advance, based on information related to the timing advance transmitted from the terminal.

### (User Terminal)

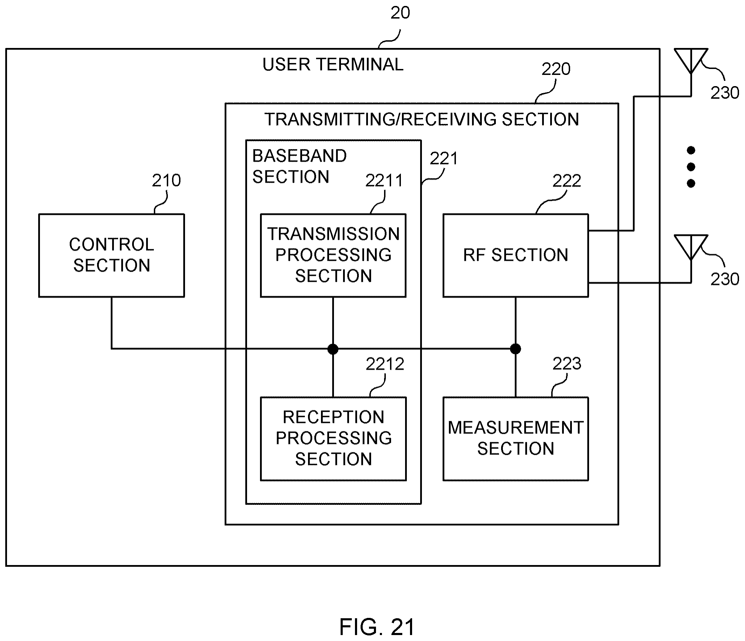

FIG. 21 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam or a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive a configuration related to a timer or a threshold value for determining validity of a timing advance obtained by UE-based timing advance measurement. The transmitting/receiving section 220 may receive a signal for triggering the UE-based timing advance measurement. The transmitting/receiving section 220 may receive a cell switch command.

The control section 210 may perform the UE-based timing advance measurement for a candidate cell. The control section 210 may determine the validity of the timing advance, based on the configuration. The control section 210 may determine the validity of the timing advance that is a certain time after measurement of the timing advance. The control section 210 may determine that the timing advance is invalid when the timer expires or a measured value of the timing advance is out of the range of threshold. The control section 210 may determine the validity of the timing advance according to whether or not a specific signal is received within a certain time. The control section 210 may perform the UE-based timing advance measurement for the candidate cell, based on the signal. The control section 210 may control performing of the UE-based timing advance measurement, based on whether or not the signal includes an indication of the candidate cell for performing the UE-based timing advance measurement, or based on reception of a physical downlink control channel order. The control section 210 may determine the validity of the timing advance, and when determining that the timing advance is valid, determines to perform the UE-based timing advance measurement, based on a timer associated with the candidate cell. The control section 210 may determine the UE-based timing advance measurement to be triggered, based on whether or not any UE-based timing advance measurement is in progress. The control section 210 may control the timing advance, based on information related to a timing advance included in the cell switch command.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

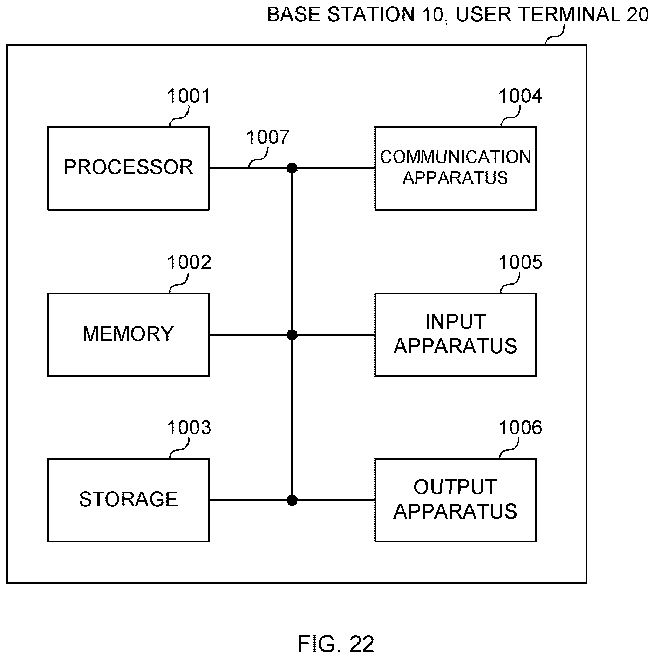

For example, a base station, a user terminal, and so on according to one embodiment of the present disclosure may function as a computer that executes the processes of the radio communication method of the present disclosure. FIG. 22 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

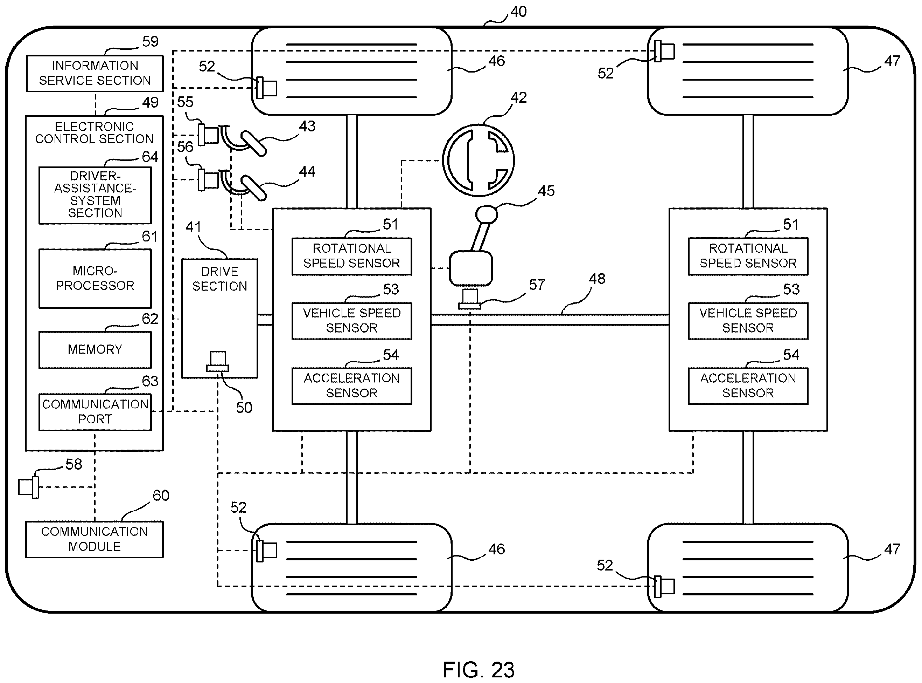

FIG. 23 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a toinfinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a receiving section that receives a signal for triggering UE-based timing advance measurement; and
a control section that performs the UE-based timing advance measurement for a candidate cell, based on the signal,
wherein the control section controls performing of the UE-based timing advance measurement, based on whether or not the signal includes an indication of the candidate cell for performing the UE-based timing advance measurement, or based on reception of a physical downlink control channel order.

2. The terminal according to claim 1, wherein
the control section determines validity of the timing advance, and when determining that the timing advance is valid, determines to perform the UE-based timing advance measurement, based on a timer associated with the candidate cell.

3. The terminal according to claim 1, wherein
the control section determines the UE-based timing advance measurement to be triggered, based on whether or not any UE-based timing advance measurement is in progress.

4. The terminal according to claim 1, wherein
the receiving section receives a cell switch command, and
the control section controls the timing advance, based on information related to a timing advance included in the cell switch command.

5. A radio communication method for a terminal, comprising:
receiving a signal for triggering UE-based timing advance measurement; and
performing the UE-based timing advance measurement for a candidate cell, based on the signal,
wherein the terminal controls performing of the UE-based timing advance measurement, based on whether or not the signal includes an indication of the candidate cell for performing the UE-based timing advance measurement, or based on reception of a physical downlink control channel order.

6. A base station comprising:
a transmitting section that transmits a signal for triggering UE-based timing advance measurement for a candidate cell or a physical downlink control channel order; and
a receiving section that receives, from a terminal, the UE-based timing advance measurement acquired, based on the signal,
wherein performing of the UE-based timing advance measurement is determined based on whether or not the signal includes an indication of a candidate cell for performing the UE-based timing advance measurement, or based on the above.
